(19) Europäisches Patentamt / European Patent Office / Office européen des brevets

(11) **EP 3 285 992 B1**

(12) **EUROPEAN PATENT SPECIFICATION**

(45) Date of publication and mention of the grant of the patent:
**16.03.2022 Bulletin 2022/11**

(21) Application number: **16783902.6**

(22) Date of filing: **22.04.2016**

(51) International Patent Classification (IPC):
**B33Y 10/00** (2015.01)   **B33Y 30/00** (2015.01)
**B33Y 50/02** (2015.01)   **B29C 64/393** (2017.01)

(52) Cooperative Patent Classification (CPC):
**B33Y 30/00; B29C 64/393; B33Y 10/00; B33Y 50/02**

(86) International application number:
**PCT/US2016/028761**

(87) International publication number:
**WO 2016/172423 (27.10.2016 Gazette 2016/43)**

(54) **APPARATUS AND METHOD FOR FORMING THREE-DIMENSIONAL OBJECTS USING SCANNING AXIS COMPENSATION AND DYNAMIC OFFSET**

VORRICHTUNG UND VERFAHREN ZUR HERSTELLUNG DREIDIMENSIONALER OBJEKTE MITTELS ABTASTUNGSACHSENKOMPENSIERUNG UND DYNAMISCHEM OFFSET

APPAREIL ET PROCÉDÉ POUR FORMER DES OBJETS TRIDIMENSIONNELS PAR COMPENSATION ET DÉCALAGE DYNAMIQUE D'AXE DE BALAYAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2015 US 201514695711**

(43) Date of publication of application:
**28.02.2018 Bulletin 2018/09**

(73) Proprietor: **Global Filtration Systems, A DBA of Gulf Filtration Systems Inc. Dearborn Heights, MI 48127 (US)**

(72) Inventors:
• **NAM, Alexander 64244 Bottrop (DE)**

• **JANBAIN, Mohamad 46147 Oberhausen (DE)**

(74) Representative: **Kluin, Jörg-Eden KLUIN PATENT Benrather Schloßallee 111 40597 Düsseldorf (DE)**

(56) References cited:
**WO-A1-2009/026520    WO-A2-97/11835**
**WO-A2-2014/165643    WO-A2-2014/199231**
**WO-A2-2015/080898    US-A- 5 123 734**
**US-B2- 8 666 142**

**Description**

**FIELD**

The disclosure relates to an apparatus and method for manufacturing three-dimensional objects, and more specifically, to an apparatus and method for using linear solidification with scanning axis compensation and dynamic offset to form such objects.

**DESCRIPTION OF THE RELATED ART**

Three-dimensional rapid prototyping and manufacturing allows for quick and accurate production of components at high accuracy. Machining steps may be reduced or eliminated using such techniques and certain components may be functionally equivalent to their regular production counterparts depending on the materials used for production.

The components produced may range in size from small to large parts. The manufacture of parts may be based on various technologies including photo-polymer hardening using light or laser curing methods. Secondary curing may take place with exposure to, for example, ultraviolet (UV) light. A process to convert a computer aided design (CAD) data to a data model suitable for rapid manufacturing may be used to produce data suitable for constructing the component. Then, a pattern generator may be used to construct the part. An example of a pattern generator may include the use of DLP (Digital Light Processing technology) from Texas Instruments®, SXRD™ (Silicon X-tal Reflective Display), LCD (Liquid Crystal Display), LCOS (Liquid Crystal on Silicon), DMD (digital mirror device), J-ILA from JVC, SLM (Spatial light modulator) or any type of selective light modulation system.

Certain techniques that have been proposed for making three-dimensional objects use linear solidification devices. An apparatus and method for making a three-dimensional object from a solidifiable material using a linear solidification device is shown e.g. in WO 2014/165643 A2. Further examples of such techniques are described in U.S. Patent Application Nos. 13/534,638, filed June 27, 2012, and 13/774,355, filed February 22, 2013, the entirety of each of which is hereby incorporated by reference. In accordance with such techniques, solidification energy is selectively scanned on an exposed surface of a solidifiable material along a scanning axis as the linear solidification device moves along a travel axis. The selective scanning is based on solidification energy source event data which is used to energize and de-energize the solidification energy source in the linear solidification device. The linear solidification device also includes a scanning device that scans solidification energy received from the source of solidification energy onto the solidifiable material along the scanning axis. In accordance with one method of making three-dimensional objects from a solidifiable material, the solidification energy source event data comprises string data in the form of a plurality of data strings, each of which includes a plurality of time values. The time values dictate times at which the solidification energy source is energized and de-energized. The coordination of the energization and de-energization of the solidification energy source with the operation of the scanning device is used to project solidification energy to desired locations along the scanning axis.

Such techniques require a method for converting three-dimensional object data, such as STL (standard triangulation language) data and CAD data (e.g., IGES and STEP data) to solidification energy source event data, such as time values that determine when a solidification energy source such as a UV or IR laser diode is selectively activated and deactivated to transmit solidification energy to a scanning device, such as a rotating polygonal mirror. The rotating polygonal mirror includes facets that are impinged upon by incoming solidification energy provided by the solidification energy source. As the rotating polygonal mirror rotates, at any one time a particular facet will be in optical communication with the solidification energy source, and the angular orientation of the facet relative to a plane perpendicular to the plane of rotation will continually vary. As each facet's angular orientation changes, solidification energy is deflected to a different location along a scanning axis. For one complete revolution of the rotating polygonal mirror, a number of scan lines equal to the number of facets may be generated (if the solidification energy source remains active during the entire revolution).

Three-dimensional object data can be converted to time values used to dictate the activation and deactivation of a solidification energy source if the desired dimensions of the object are known and the scanning speed is known. Techniques for performing such conversions are described in U.S. Patent Application Nos. 13/534,638 and 13/774,355, as well as in U.S. Patent Application No. 14/091,683, filed on November 27, 2013, the entirety of which is hereby incorporated by reference. However, for a given linear solidification device which comprises a solidification energy source, a rotating polygonal mirror, and optics (lenses), the solidification length per unit time will vary with position along the scanning axis. If this variation is not taken into account, the resulting part will be inaccurate relative to the original object data that defined it. A variety of factors contribute to this variation, including (i) the varying distance that solidification energy travels from the rotating mirror to the solidifiable material at different angular orientations of a particular facet, (ii) variations in rotational speed of the rotating mirror, (iv) variations in the size and geometry of the incident solidification energy on the solidifiable material, and (v) the difference in the dimensions of a solidified region of solidifiable material relative to the dimensions of the incident solidification energy. It is desirable to adjust the time values used to determine when to activate and deactivate a solidification energy source to obtain the specific object dimensions and geometry dictated by the original three-dimensional object data. Thus, a need has arisen for an apparatus and method for forming three-dimensional objects which addresses the foregoing issues.

## BRIEF DESCRIPTION OF THE DRAWINGS

The disclosure will now be described, by way of example, with reference to the accompanying drawings, in which:

FIG. 1A is a side elevation schematic view of a first exemplary apparatus for making a three-dimensional object using linear solidification used to illustrate the use of scanning axis compensation and dynamic offsetting of solidification energy source event data;

FIG. 1B is a perspective schematic view of a second exemplary apparatus for making a three-dimensional object using linear solidification used to illustrate the use of scanning axis compensation and dynamic offsetting of solidification energy state data;

FIG. 2A is an image of a model of a three-dimensional object defined by three-dimensional object data;

FIG. 2B is a depiction of a plurality of slices of the object of FIG. 2A created by slicing the object of FIG. 2A with a plurality of parallel slicing planes;

FIG. 2C is a graphical depiction of contour data for one of the slices shown in FIG. 2B;

FIG. 2D is a graphical depiction of linear strip data generated from the contour data of FIG. 2C used to illustrate the generation of solidification energy source event data;

FIG. 3A is a graphical depiction of a first example of STL data comprising a plurality of triangles used to define a spherical object;

FIG. 3B is a graphical depiction of a second example of STL data comprising a plurality of triangles used to define a spherical object;

FIG. 4A is a graphical depiction of a voxel matrix superimposed over a model of a three-dimensional object defined by three-dimensional object data;

FIG. 4B is a graphical depiction of a voxel from the voxel matrix of FIG. 4B;

FIG. 4C is a graphical perspective view of active voxels defined by the intersection of the object model of FIG. 4A and the voxels at a particular z-axis location in the voxel matrix of FIG. 4A;

FIG. 4D is a top plan view of the voxels of FIG. 4C;

FIG. 5A is an exemplary top plan view of a build envelope of an apparatus for making a three-dimensional object;

FIG. 5B is an exemplary top plan view of the build envelope of FIG. 5A with the maximum scan lines of a linear solidification device superimposed thereon to illustrate the scan line gap $dx$ of the linear solidification device;

FIG. 5C is a data table used to illustrate solidification energy source event data comprising a plurality of time values at which the energization state of a solidification energy source changes for a plurality of scan lines;

FIG. 6 is a schematic diagram used to illustrate transmission of solidification energy to various points on an exposed surface of a solidifiable material along a scanning axis;

FIG. 7 is a schematic diagram used to illustrate the offsetting of time values used to activate and deactivate a linear solidification device solidification energy source to obtain a desired length A-B of solidified material;

FIG. 8 is a graph depicting a plurality of large calibration objects and small calibration objects within a path generation reference frame of an apparatus for making three-dimensional objects used to generate a step function for dynamically compensating and offsetting solidification energy source event data;

FIG. 9 is a set of as-produced calibration objects from one of the scanning axis ranges of FIG. 8;

FIG. 10A is a table depicting solidification energy source event data used to generate the large and small calibration objects of FIGS. 8 and 9;

FIG. 10B is a table depicting string data corresponding to the solidification energy source event data of FIG. 10A;

FIG. 11A is a flow chart depicting a method of obtaining compensated and offset scanning time values from uncompensated scanning time values corresponding to a portion of a three-dimensional object;

FIG. 11B is a flow chart depicting a method of generating a step function relating refined and adjusted solidification lengths per unit time to scanning time values;

FIG. 12 is a table illustrating a step function generated using the method of FIG. 11B;

FIG. 13 is a flow chart depicting a method of orienting three-dimensional object data relative to a path generation reference frame of an apparatus for making three-dimensional objects for use in generating solidification energy source event data from voxel data;

FIG. 14 is an illustration of a virtual build platform of an apparatus for making a three-dimensional object;

FIG. 15 is an illustration of a path generation reference frame with the virtual build platform of FIG. 14 shown at various positions within the path generation frame to illustrate virtual build platform centering and shifting operations;

and

FIG. 16 is a graph depicting a plurality of calibration object sets defining a continuous set of k scanning axis ranges from jb to je used to calculate a proportionate error and refined and adjusted small calibration object scanning axis lengths.

Like numerals refer to like parts in the drawings.

## DETAILED DESCRIPTION

The Figures illustrate examples of an apparatus and method for manufacturing a three-dimensional object from a solidifiable material. Based on the foregoing, it is to be generally understood that the nomenclature used herein is simply for convenience and the terms used to describe the invention should be given the broadest meaning by one of ordinary skill in the art.

The apparatuses and methods described herein are generally applicable to additive manufacturing of three-dimensional objects, such as components or parts (discussed herein generally as objects), but may be used beyond that scope for alternative applications. The system and methods generally include a linear solidification device that applies solidification energy to a solidifiable material, such as a photohardenable resin. The linear solidification devices apply solidification energy in a generally--and preferably substantially--linear pattern across an exposed surface of the solidifiable material and also move in a direction other than the one defined by the length of the linear pattern while applying solidification energy. In certain examples, the linear solidification device includes a scanning device that deflects received solidification energy in a scanning pattern. Such scanning devices include without limitation rotating polygonal mirrors and linear scanning micromirrors.

As used herein, the phrases "three-dimensional object data" and "three-dimensional object data items" refer to object data and object data items, respectively, that have coordinates in three dimensions. However, three-dimensional object "layer data" or three-dimensional object data representative of a layer of a three-dimensional object refers to object data and object data items at a fixed location along one of the three-dimensions, typically along the build (z) axis.

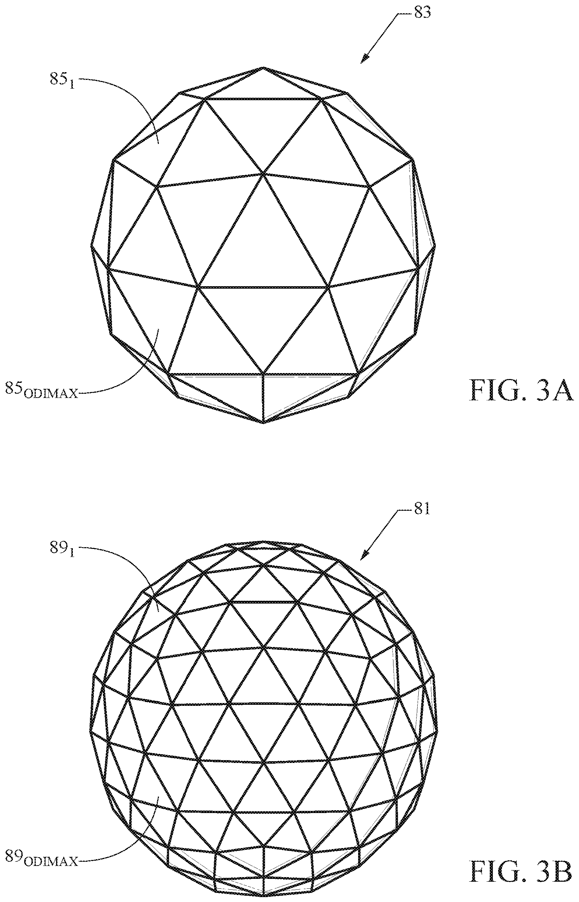

One example of three-dimensional object data is STL data. A set of STL data defines a three-dimensional object model by using three-dimensional object data items that comprise polygon data sets wherein each polygon data set defines a polygon in three-dimensions. In STL data, the polygon is typically a triangle. Each triangle is three-dimensional and comprises vertices with x, y, and z coordinates as well as a facet normal, which is a vector perpendicular to the triangle facet with a length of 1.0 unit. The facet normal has three coordinates that define its location on the facet of the triangle. FIGS. 3A and 3B graphically depict a model of a sphere defined by STL data. The sphere model 83 of FIG. 3A comprises a plurality of triangles, each of which may be assigned an "object data index" or "ODI" to uniquely identify it. In the example of FIG. 3A, triangles 85 have ODI values ranging from 1 to $ODI_{max}$ where $ODI_{max}$ is the largest object data index value for any of the triangles 85. Correspondingly, sphere model 81 comprises triangles 89 which also have ODI values ranging from 1 to $ODI_{max}$. As the figures indicate, increasing the number of triangles (and hence, the value of $ODI_{max}$) yields a sphere model with greater resolution and which more accurately represents an actual sphere. As will be illustrated and explained further below, object data for a given layer of a three-dimensional object may be defined by a plurality of sets of string data, wherein each set of string data comprises a plurality of time values, each of which defines a time at which a solidification energy source event (e.g., activating or deactivating a laser diode) occurs. This form of data is particularly well-suited for use with linear solidification devices in which solidification energy is scanned along an exposed surface of a solidifiable material in linear patterns along a scanning axis while the linear solidification device travels along a travel axis.

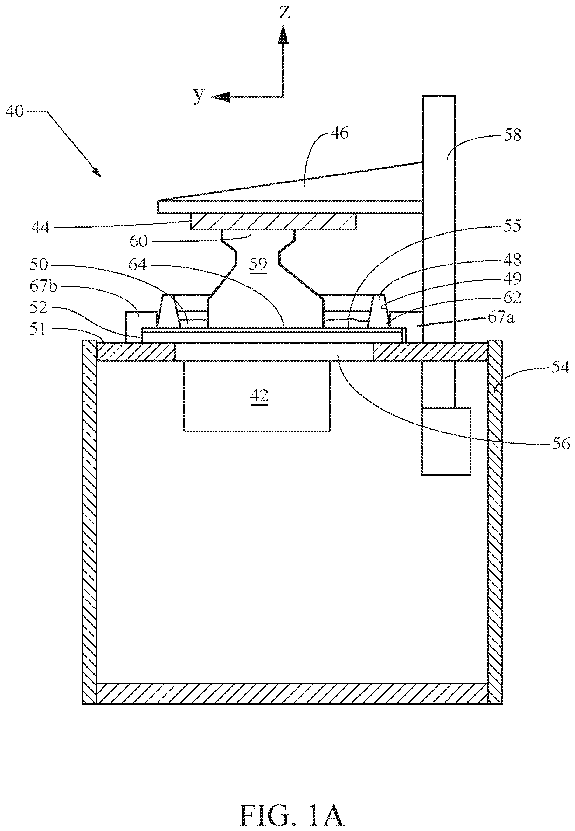

FIG.1A depicts a simplified, schematic view of a system 40 for making a three-dimensional object 59 from a solidifiable material 50. System 40 uses a linear solidification device 42 to selectively solidify sections of a solidifiable material along a scanning (y) axis as the linear solidification device 42 moves along a travel (x) axis (not shown in FIG. 1A but would be orthogonal to the page) and is one example of a system that can use the scanning axis compensation and dynamic offsetting of solidification energy source event data techniques described herein to guide the selective solidification process. The system 40 of FIG. 1A uses an "upside down" build process in that the object 59 is suspended from build platform 44 and grows in the negative build (z) axis direction while the build platform moves in the positive build (z) axis direction, such that the top of the object is oriented beneath the base of the object (which is proximate build platform 44).

System 40 includes a housing 54 used to support a solidifiable material container 48, a linear solidification device 42, and a build platform 44. Solidifiable material container 48 comprises sidewalls 62 and a bottom that comprises a rigid or semi rigid solidification substrate 52 that is transparent and/or translucent with a film 55 coating adhered to its upper surface. FIG. 1A is provided to illustrate the basic arrangement and relationship of the linear solidification device 42, housing 54, solidifiable material container 48, and build platform 44. In FIG. 1A, object 59 includes a build platform contact surface 60 that is adhered to build platform 44.

Solidification substrate 52 is held in frame sections 67a and 67b so as to be positioned over opening 56 in the upper surface 51 of housing 54. During an object building process an exposed surface 64 of the partially-completed three-dimensional object 59 is immersed in solidifiable material 50 so that a desired layer thickness of solidifiable material is provided between the exposed object surface 64 and the film 55 coated on the solidification substrate 52. Solidification energy (e.g., UV or visible light) is projected upwardly along the build axis (z) direction through the solidification substrate 52 and film 55 to solidify the desired layer thickness of solidifiable material in contact with the film 55.

System 40 includes a motor (not shown) and translation assembly for translating linear solidification device 42 along the travel (x) axis as well as a motor and translation assembly for translating build platform 44 and build platform support 46 along the build (z) axis. Suitable translation assemblies are shown in FIGS. 19 and 20A and described in paragraphs 0141-0143, and 0153 of U.S. Patent Application No. 13/534,638, filed on June 27, 2012, the entirety of which is hereby incorporated by reference. One or more controllers and/or microcontrollers (not shown) are provided to selectively activate the motors and to selectively scan solidification energy along the scanning (y) axis based on solidification energy source event data, as described further below. In preferred examples, the solidification energy source event data is generated by performing a voxelization process on a model of the three-dimensional object 59 and converting the voxel data to time values (e.g., CPU tick values).

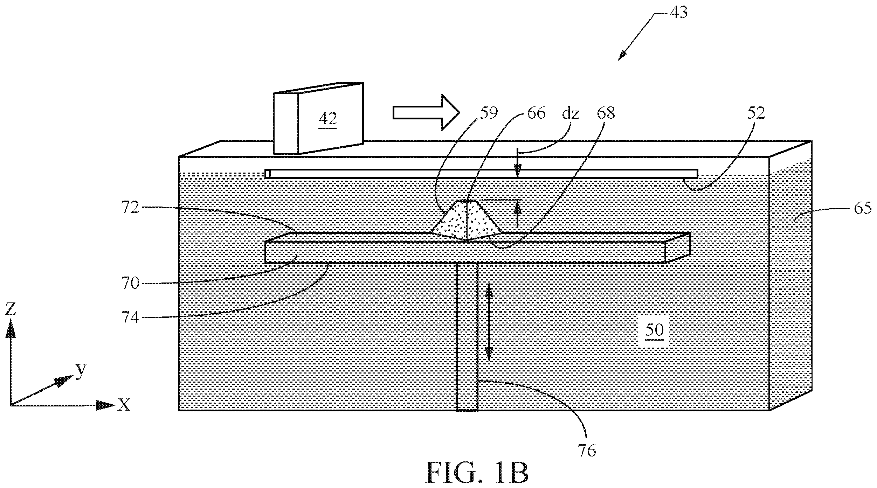

An alternate system 43 for making a three-dimensional object from a solidifiable material is depicted in FIG. 1B. System 43 uses a "right-side up" build process in which the three-dimensional object 59 is progressively built in the positive direction along the build (z) axis as the build platform 70 moves in the negative direction along the build (z) axis so that the top of the object 66 is above the bottom of the object 68, which is proximate build platform 70. As with system 40, system 43 includes a linear solidification device 42 that selectively scans solidification energy along a scanning (y) axis while traveling along a travel (x) axis. Three-dimensional object 59 is built on build platform 70 which progressively moves downward along the build (z) axis during an object build process. Three-dimensional object 59 is progressively built by successively solidifying a series of layers of solidifiable material 50. Following the solidification of each layer, the build platform 70 moves downward along the build (z) axis by a layer thickness amount dz to allow fresh unsolidified material to fill the space between the uppermost portion 66 of the partially formed object 59 and a solidification substrate 52. Solidification substrate 52 is a rigid or semi-rigid structure that is generally planar and which is transparent and/or translucent to solidification energy transmitted by linear solidification device 42. Solidification energy from linear solidification device 42 travels through the solidification substrate 52 and contacts the solidifiable material 50, causing it to solidify in a pattern dictated by the pattern in which the linear solidification device 42 selectively scans solidification energy along the scanning (y) axis while traveling along the travel (x) axis.

Build platform 70 includes an upward facing surface 72 that is in facing opposition to a downward facing surface of solidification substrate 52. Build platform 70 also includes a downward facing surface 74 that is opposite upward facing surface 72. The bottom 68 of object 59 (or removable supports attached to the bottom of the object) rests on and adheres to upward facing build platform surface 72. Build platform shaft 76 is operatively connected to a motor and translation assembly (not shown) that moves the build platform shaft 76 and build platform 70 along the build (z) axis.

Solidifiable material 50 is held in container 65 in which the build platform 70 is movably disposed. Linear solidification device 42 is operatively connected to a motor and translation assembly (not shown) that translates linear solidification device 42 along the travel (x) axis. Suitable motor and translation assemblies are depicted and described in U.S. Patent Application No. 13/534,638, for example, in FIGS. 3-4, 7-8 and the paragraphs of relating thereto.

One or more controllers or microcontrollers (not shown) selectively activate the motors and also selectively provide solidification energy from the linear solidification device 42 to the solidifiable material along the scanning (y) axis based on solidification energy source event data generated by voxelizing three-dimensional object data representative of the object 59. The build platforms 44, and 70 are generally planar and moveable along the build (z) axis only. However, other build platforms may be used. U.S. Patent Application No. 14/051,801, filed October 11, 2013, describes a build platform that is curved along the travel (x) axis direction and which moves in trochoidal patterns along the travel (x) and build (z) axes while rotating about a rotational axis parallel to the scanning (y) axis. The apparatuses for making three-dimensional objects described in U.S. Patent Application No. 14/051,801 may also be used in accordance with the present disclosure, and the entirety of the application's contents are hereby incorporated by reference.

As indicated previously, in certain examples solidifiable material 50 such as a photohardenable resin is provided under (or over) substantially rigid or semi-rigid substrate 52 to receive solidification energy transmitted through substrate 52. Solidification substrate 52 is generally rigid or semi-rigid and transparent and/or translucent. Solidification substrate 52 is also substantially permeable to the energy supplied by linear solidification device 42. In certain examples, it is preferred that the energy from linear solidification device 42 pass through solidification substrate 52 without a significant diminution in transmitted energy or a significant alteration of the energy spectrum transmitted to the solidification material relative to the spectrum that is incident to the upper surface of solidification substrate 52. In the case where the energy from solidification energy source 126 is light (including non-visible light such as UV light), solidification substrate 52 is preferably substantially transparent and/or translucent to the wavelength(s) of light supplied by linear solidification device 42.

One example of a rigid or semi-rigid solidification substrate 52 is a translucent float glass. Another example is a translucent plastic. A variety of different float glasses and plastics may be used. Exemplary plastics that may be used include transparent acrylic plastics supplied by Evonik under the name Acrylite®. The term "translucent" is meant to indicate that substrate 52 is capable of transmitting the light wavelengths (including non-visible light such as UV light) necessary to solidify the solidifiable material and that the intensity of such wavelengths is not significantly altered as the light passes through substrate 52. In the case of photopolymers, a photoinitiator is commonly provided to start the polymerization/cross-linking process. Photoinitiators will have an absorption spectrum based on their concentration in the photopolymer. That spectrum corresponds to the wavelengths that must pass through solidification substrate 52 and which must be absorbed by the photoinitiator to initiate solidification. In one example wherein linear solidification device supplies blue laser diode solidification energy, Irgacure 819 and Irgacure 714 photoinitiators may preferably be used.

As solidification energy is supplied to it, the exposed surface of the solidifiable material will solidify in accordance with a generally--and preferably substantially--linear pattern along the scanning (y) axis (or a scanning axis that is tilted relative to the y-axis depending on the relative speed of scanning and movement of the linear solidification device along the travel (x) axis), creating a thin linear region of material that adheres to solidification substrate 52. As indicated previously, movement of the build platform 44, 70 along the build (z) axis can cause the object 59 to break or distort if it remains adhered to solidification substrate 52. In certain examples, the surface of rigid or semi-rigid solidification substrate 52 which contacts the solidifiable material is coated with a material 55 (FIG. 1A) used to reduce the adhesion of solidified material to substrate 52. Suitable adhesion reducing agents include Teflon® coatings. Non-stick coatings such as nanocoatings may also be used.

As discussed herein, a solidifiable material is a material that when subjected to energy, wholly or partially hardens. This reaction to solidification or partial solidification may be used as the basis for constructing the three-dimensional object. Examples of a solidifiable material may include a polymerizable or cross-linkable material, a photopolymer, a photo powder, a photo paste, or a photosensitive composite that contains any kind of ceramic based powder such as aluminum oxide or zirconium oxide or ytteria stabilized zirconium oxide, a curable silicone composition, silica based nano-particles or nano-composites. The solidifiable material may further include fillers. Moreover, the solidifiable material my take on a final form (e.g., after exposure to the electromagnetic radiation) that may vary from semi-solids, solids, waxes, and crystalline solids. In one embodiment of a photopolymer paste solidifiable material, a viscosity of between 10000 cP (centipoises) and 150000 cp is preferred.

When discussing a photopolymerizable, photocurable, or solidifiable material, any material is meant, possibly comprising a resin and optionally further components, which is solidifiable by means of supply of stimulating energy such as electromagnetic radiation. Suitably, a material that is polymerizable and/or cross-linkable (i.e., curable) by electromagnetic radiation (common wavelengths in use today include UV radiation and/or visible light) can be used as such material. In an example, a material comprising a resin formed from at least one ethylenically unsaturated compound (including but not limited to (meth)acrylate monomers and polymers) and/or at least one epoxy group-containing compound may be used. Suitable other components of the solidifiable material include, for example, inorganic and/or organic fillers, coloring substances, viscose-controlling agents, etc., but are not limited thereto.

When photopolymers are used as the solidifiable material, a photoinitiator is typically provided. The photoinitiator absorbs light and generates free radicals which start the polymerization and/or crosslinking process. Suitable types of photoinitiators include metallocenes, 1,2 di-ketones, acylphosphine oxides, benzyldimethyl-ketals, $\alpha$-amino ketones, and $\alpha$-hydroxy ketones. Examples of suitable metallocenes include Bis (eta 5-2, 4-cyclopenadien-1-yl) Bis [2,6-difluoro-3-(1H-pyrrol-1-yl) phenyl] titanium, such as Irgacure 784, which is supplied by Ciba Specialty chemicals. Examples of suitable 1,2 di-ketones include quinones such as camphorquinone. Examples of suitable acylphosphine oxides include bis acyl phosphine oxide (BAPO), which is supplied under the name Irgacure 819, and mono acyl phosphine oxide (MAPO) which is supplied under the name Darocur® TPO. Both Irgacure 819 and Darocur® TPO are supplied by Ciba Specialty Chemicals. Examples of suitable benzyldimethyl ketals include alpha, alpha-dimethoxy-alpha-phenylacetophenone, which is supplied under the name Irgacure 651. Suitable $\alpha$-amino ketones include 2-benzyl-2-(dimethylamino)-1-[4-(4-morpholinyl) phenyl]-1-butanone, which is supplied under the name Irgacure 369. Suitable $\alpha$-hydroxy ketones include 1-hydroxy-cyclohexyl-phenyl-ketone, which is supplied under the name Irgacure 184 and a 50-50 (by weight) mixture of 1-hydroxy-cyclohexyl-phenyl-ketone and benzophenone, which is supplied under the name Irgacure 500.

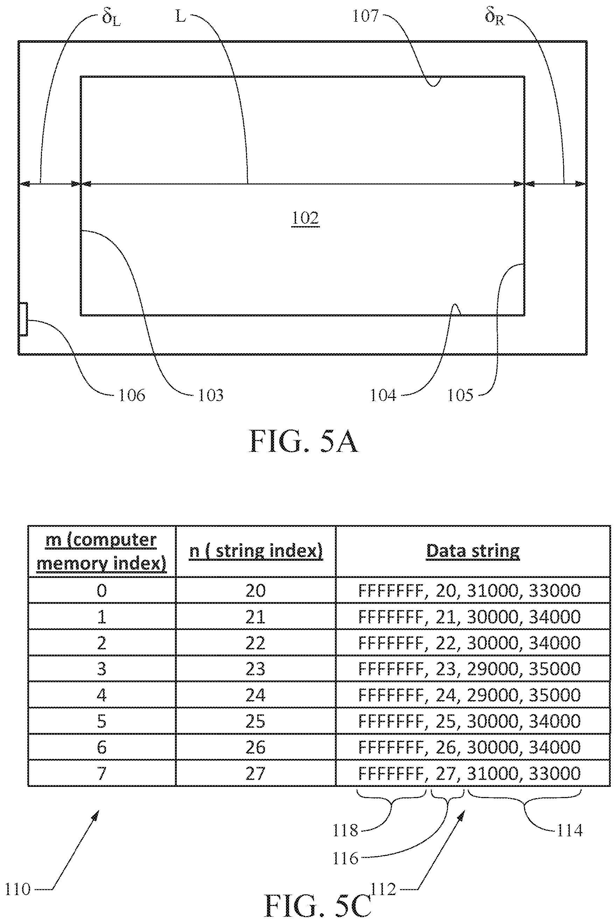

The linear solidification device 42 may be configured in a number of ways. In certain examples, the linear solidification device 42 progressively exposes portions of the solidifiable material 50 to solidification energy along one axis (a scanning axis) as the linear solidification device 42 moves along another axis (a travel axis). The solidification energy may comprise electromagnetic radiation. The electromagnetic radiation may include actinic light, visible or invisible light, UV-radiation, IR-radiation, electron beam radiation, X-ray radiation, laser radiation, or the like. Moreover, while each type of electromagnetic radiation in the electromagnetic spectrum may be discussed generally, the disclosure is not limited to the specific examples provided. Those of skill in the art are aware that variations on the type of electromagnetic radiation and the methods of generating the electromagnetic radiation may be determined based on the needs of the application. Suitable examples of linear solidification devices include those depicted in FIGS. 5A-5D of U.S. Patent Application No. 13/534,638 and the corresponding paragraphs therein.

Techniques for generating solidification energy source event data from three-dimensional object data include data slicing techniques and the countourless object data techniques described in U.S. Patent Application No. 14/091,683, filed on November 27, 2013, the entirety of which is hereby incorporated by reference.

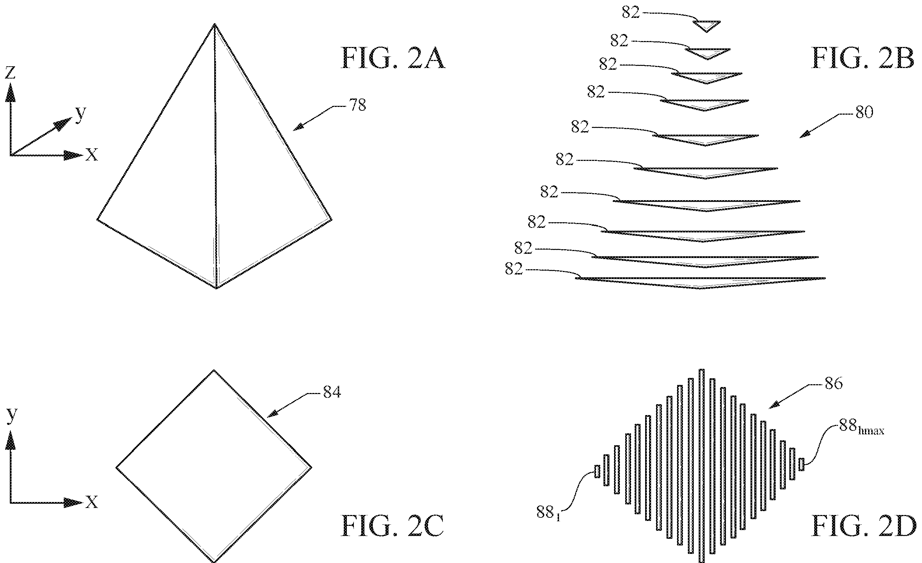

Referring to FIGS. 2A-2D, a data slicing technique is illustrated. In FIG. 2A an image of a model of an object 78 is depicted. The object is in the shape of a pyramid with four triangular sides and a square base. The object 78 may be represented using three-dimensional object data comprising a plurality of object data items, such as STL triangles or other polygonal object data items. In techniques that use contour data, a slicing operation is performed by mathematically determining the intersections between a plurality of planes parallel to a defined axis (the z-axis in the figures) and the object model 78. The result of this process is a number of data slices which are graphically illustrated as slices 82 in FIGS. 2B. The slicing process yields a number of twodimensional data sets from a three-dimensional object representation. The loci of points defined by the intersection of the outer surface of the object model and each slicing plane comprises a closed polygon, one example of which is shown in FIG. 2C. The slice in 2C comprises four lines that define the shape of a square and which comprise contour data 84. Thus, the process of contour data generation involves calculating the coordinates of the lines that define the twodimensional, closed polygon contours resulting from a slicing process.

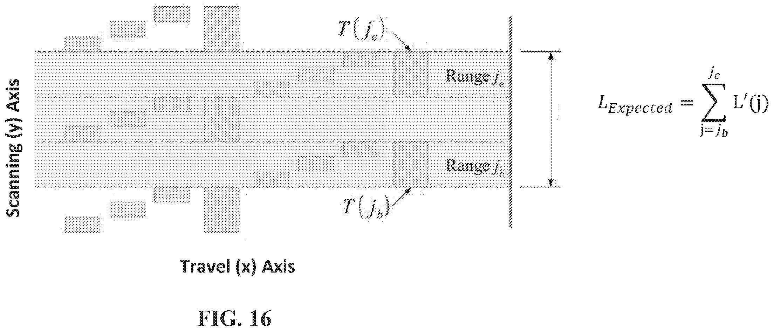

To obtain solidification energy source event data, each set of contour data 84 is then subdivided into a plurality 86 of adjacent linear strips $88_1$ to $88_{nmax}$ as shown in FIG. 2D. Each strip has a length corresponding to the length of a scanning (y) axis along which a linear solidification device such as devices 42 selectively projects solidification energy. Each strip $88_1$ to $88_{nmax}$ defines scanning (y) axis locations at which the energization state of the linear solidification device 42 changes. In the specific example of FIG. 2D, the particular object layer is defined by a series of continuous adjacent strips of varying lengths. One end of each strip represents a scanning (y) axis location at which solidification begins for a particular travel (x) axis location, and the other end of each strip represents a scanning axis location at which solidification ends for particular travel (x) axis location. These locations can, in some systems, be converted to time values that dictate when a solidification energy source is activated or deactivated as described in paragraphs 164-181 and FIGS.16(c)-16(g) of U.S. Patent Application No. 13/534,638. An example of the resulting string data is depicted in FIGS. 16(d), 16(f), and 16(g) of U.S. Patent Application No. 13/534,638. The string data includes a plurality of data strings, each of which includes solidification energy source event data in the form of consecutive time values. Each time value corresponds to a change of the energization state of a linear solidification device. Thus, in the example of FIG. 2D, each strip corresponds to two time values, a first time at which a solidification energy source is activated, and a second at which the solidification energy source is deactivated.

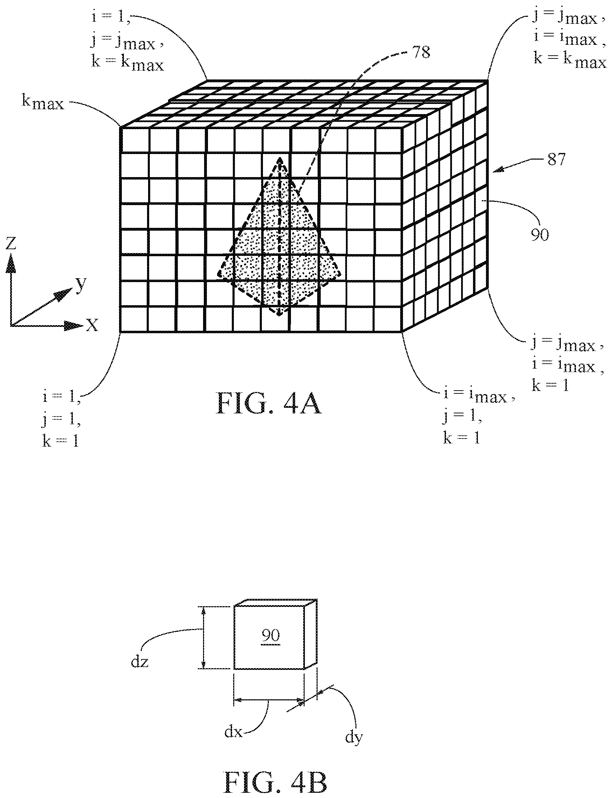

In contrast to the technique illustrated in FIGS. 2A-2D, contourless object data may also be used to generate solidification energy source event data. Referring to FIG. 4A a voxel matrix 87 is shown and is defined relative to a reference coordinate system with x, y, and z axes. The voxel matrix 87 comprises a plurality of three-dimensional volumetric pixels 90 ("voxels" for short). Each voxel 90 has indices *i, j*, and *k,* which respectively define its location within the voxel matrix 87 and along the x, y, and z axes. In addition, each voxel 90 has a length dx along the x-axis, a width *dy* along the y-axis, and a height *dz* along the z-axis, as shown in FIG. 4B. The voxels collectively define a cube structure with $i_{max}$ voxels along the x-axis, $j_{max}$ voxels along the y-axis and $k_{max}$ voxels along the z-axis. The index value $i_{max}$ is the maximum x-axis index value, the index value $j_{max}$ is the maximum y-axis index value, and the index value $k_{max}$ is the maximum z-axis index value. Although the voxel is illustrated graphically, in preferred examples, it is defined via mathematical equations when used to generate voxel data.

In FIG. 4A an image of a model three-dimensional object 78 is shown placed on the same reference coordinate system as the voxel matrix 87, thereby superimposing the voxel matrix over the object model 78. In certain preferred examples, the model of the three-dimensional object is defined by three-dimensional object data comprising a plurality of three-dimensional object data items of the type described previously. The superimposition of the voxel matrix over the object model 78 is preferably carried out using mathematical equations but is depicted graphically in FIG. 4A for ease of understanding. The superimposition process yields voxel data representative of the three-dimensional object. The voxel data comprises sets of active voxels that are defined by their whole or partial intersection with the object model 78. The voxel data is then used to generate solidification energy source event data that determines the pattern of solidification energy supplied by linear solidification device 42 along the scanning (y) axis as it moves along the travel (x) axis.

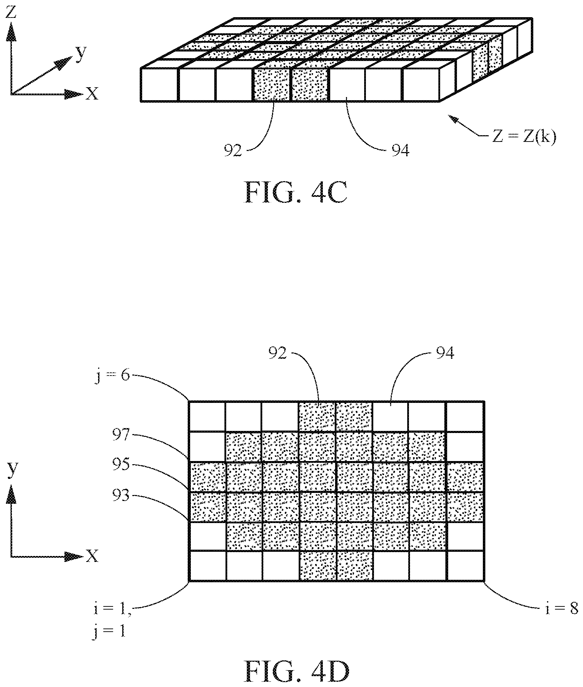

FIGS. 4C and 4D illustrate the intersection of active voxels at a particular z-axis location (z(k)) with the object model 78. In the illustrated example, there are 8 voxels (i=1 to 8) along the x-axis, and 6 voxels (j=1 to 6) along the y-axis. FIG. 4C is a perspective view showing the active voxels 92 (in black) that intersect the voxel matrix 87 at z=z(k) as well as the inactive voxels 94 at z=z(k). In the illustrated example, the active voxels 92 are those voxels having any portion of their interior volume occupied by the object model 78. In other examples, other techniques may be used to define the active voxels. For example, a threshold percentage of the voxel volume occupied by the object model 78 may be set such that the active voxels are those exceeding the threshold percentage. In accordance with the example of FIGS. 4C and 4D, in certain embodiments, each voxel 90 in voxel matrix 87 may be evaluated to see if any portion of its interior volume intersects object model 78. This process yields a set of active voxels, each having defined x, y, and z coordinates and corresponding index values, i, j, and k. The active voxels may then be used to define solidification energy source event data. For example, referring to FIG. 4D there are two active voxels at x-axis index i=1, having scanning axis index values of 3 and 4. The voxel at j=3 defines a location at which solidification energy is first supplied to the solidifiable material. The voxel at j=4 defines a location at which the supply of solidification energy is discontinued (so that no solidification occurs at j=5). These scanning axis locations for j=3 and j=4 may then define corresponding solidification energy source event data values. In one example, they each define time values with the time value for j=3 defining the time at which solidification energy is first supplied to the solidifiable material and the time value for j=4 defining the time at which solidification energy is discontinued.

It is useful to use the term "build envelope" to describe the maximum distance along the travel (x) axis and the maximum distance along the scanning (y) axis in which solidification energy may be supplied to the solidifiable material. The scanning (y) axis length of the build envelope will be limited by the maximum length of solidification energy that can be provided by linear solidification device 42 along the scanning (y) axis, but may be smaller than that length as dictated by the build platform 44, 70 dimensions, the dimensions of the solidifiable material container 48, 65 or other considerations. The travel (x) axis length of the build envelope will be limited by the maximum distance of travel of linear solidification device 42, but may also be limited by similar considerations.

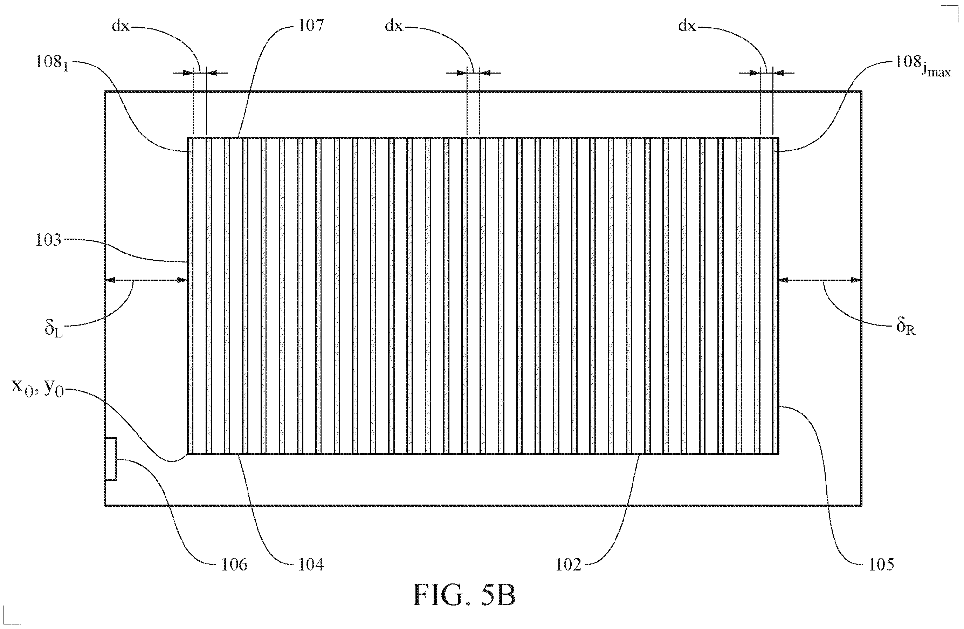

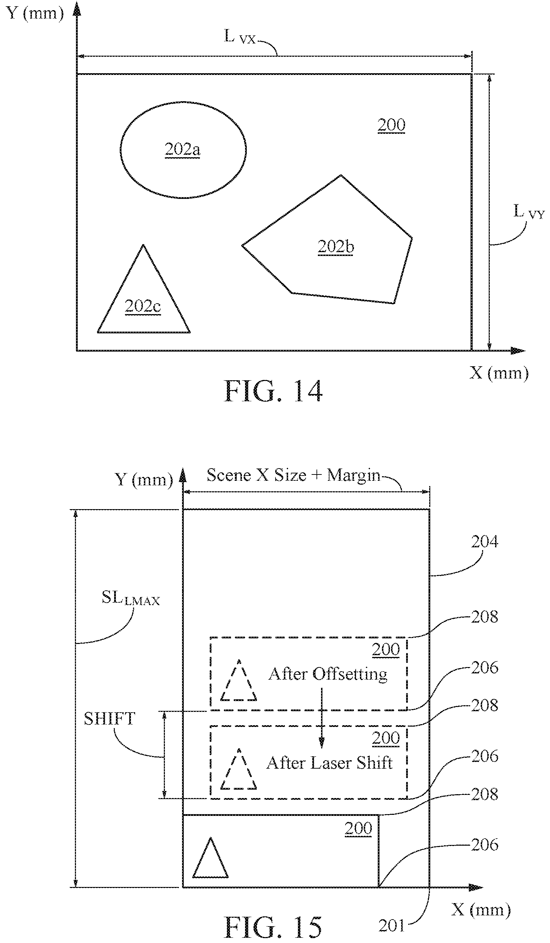

FIGS. 5A and 5B depict a top view of a region of solidifiable material which includes a build envelope 102. The build envelope 102 defines the maximum area of solidification, and therefore, the maximum area of the three-dimensional object in the x-y plane. A build platform may be defined mathematically (and referred to as a "virtual build platform" 200 in FIGS. 14 and 15) by defining maximum scanning and travel axis locations within the coordinate system. For example, when string data comprising sets of time values are used to define when to activate or deactivate a solidification energy source, the time values will be defined relative to a reference time value which is the first location along the scanning (y) axis at which solidification may occur. Ultimately, the virtual build platform 200 will be mathematically positioned in a path generation reference frame 204 (described below) which defines the locations at which scanning is physically possible based on the linear solidification device 42, the container 48 (FIG. 1A) or the container 65 (FIG. 1B), the build platform 70, and their relative relationships to one another. The string data may then be adjusted to account for the location of the virtual build platform 200 within the path generation reference frame 204.

For example, when a rotating polygonal mirror is used as a scanning device, if the solidification energy source remains activated, scan lines will be produced which have a minimum and maximum position along the scanning (y) axis. These positions comprise the scanning (y) axis maximum and minimum locations of the path generation reference frame 204, and the build envelope of the apparatus. The solidification energy source event data may be defined so that the solidification energy source is never activated before a first location along the scanning axis is reached. This location will comprise the location of the virtual build platform 200 border 206 within the path generation reference frame. The location is determined by determining where in the path generation frame 204 the virtual build platform 200 will be located, and then determining the scanning time required to reach it from the scanning axis border 201 of the path generation reference frame 204. The string data defined for the virtual build platform 200 may then be shifted by that scanning time.

As shown in FIGS. 5A and 5B, in certain cases the linear solidification device 42 is movable along the travel (x) axis along a total distance that equals the sum of a build envelope 102 travel (x) axis length L and two offset distances, $\delta_L$ and $\delta_R$. The offset distances $\delta_L$ and $\delta_R$ respectively represent the distance from the left end-of-travel (EOT) position of linear solidification device 42 to the left-hand side build envelope boundary 103 and the distance from the right-hand side EOT position to the right-hand side build envelope boundary 105. In certain examples, the offset distances, $\delta_L$ and $\delta_R$ are provided to ensure that the linear solidification device 42 has time to achieve a substantially constant speed in the travel (x) axis direction before any solidification of solidifiable material will begin (i.e., before build envelope 102 is reached). In certain examples, the movement of the linear solidification device 42 at a constant travel (x) axis speed avoids the necessity of directly measuring the travel (x) axis position at any given moment because it allows a motor movement parameter for a linear solidification device travel axis translation motor (not shown) to provide an indirect indication of x-axis position. In one particular example suitable for servo and stepper motors, the motor movement parameter is a number of motor steps. In certain examples, $\delta_L$ and $\delta_R$ are equal. Travel (x) axis end of travel sensor 106 may also be provided to generate a signal indicating the linear solidification device 42 has reached an end-of-travel position along the travel (x) axis.

In certain illustrative examples, the active voxels at each build (z) axis location (k=1 to $k_{max}$) correspond to scan lines 108 along which the linear solidification device 42 may selectively provide solidification energy within build envelope 102. Examples of such scan lines 108 are shown mapped onto build envelope 102 in FIG. 5B. Each scan line 108 may be assigned a scan line index ranging in value from 1 to $n_{max}$. The maximum length of each scan line 108 is defined by the distance between the build envelope scanning axis borders 104 and 107. The scan lines are arranged adjacent to one another starting at a build envelope travel axis border 103 and ending at build envelope travel axis border 105.

During a solidification operation for any given layer of a three-dimensional object, solidification energy will not necessarily be supplied along all scan lines 108 or along the full length of any particular scan line 108. The particular scan lines 108 and portions thereof during which scanning will occur will be dictated by solidification energy source event data. FIG. 5C provides a table that illustrates an example of solidification energy source event data in the form of CPU tick values that are provided in data strings. Each data string may be assigned a string index value ($n=1$ to $n_{max}$) that uniquely corresponds to one of the scan lines 108 in the build envelope 102. In certain examples, the string index value is the same as the scan line index value. The string indices begin with $n=1$ at the left-hand border 103 of build envelope 102 and end at a maximum string number $N_{max}$ at the right hand border 105 of the build envelope 102.

Certain sets of data strings will not have any object data associated with them because they do not correspond to travel (x) axis locations where solidification where occur. In accordance with the data in FIG. 5C (and based on the voxel data in FIG. 5B), no solidification occurs prior to string index $n=20$ and no solidification occurs after the string index $n+7$. Thus, there are no entries in the table of FIG. 5C for the travel (x) axis locations at which no solidification occurs within build envelope 102. In certain implementations, it is convenient to reduce the amount of computer memory required to store string data by defining a computer memory index m 110 which is used to uniquely identify only those data strings that include solidification energy source event data (i.e., only those data strings for locations along the travel (x) axis where solidification will actually occur).

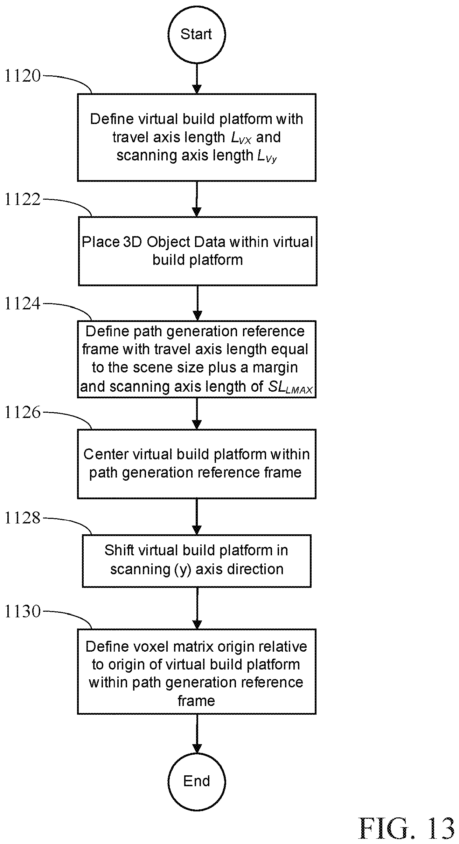

Each set of data strings depicted in FIG. 5C has a start code which is represented in hexadecimal notation by a series of eight Fs. Going from left to right, the string index n for the data string is next. Following the string index, a series of solidification time values is provided. Each solidification time value defines the occurrence of a solidification energy source energization event. In one example, the energization states are ON or OFF. The solidification time values may take a variety of forms. However, in one implementation they are defined as elapsed times of a CPU clock in microcontroller unit used to operate the system for making a three-dimensional object. In one example, the CPU has a clock speed of 66MHz and the units of time are CPU ticks. In an example where the line scanning speed is 1000 lines per second, the maximum scan length of each line in the scanning axis (y-axis direction) corresponds to 66,000 ticks. Thus, the data string at $n=20$ indicates that solidification energy will be supplied to the solidifiable material at 31000 ticks and discontinued at 44000 ticks. The data string at $n=21$ indicates that solidification energy will be supplied to the solidifiable material at 30000 ticks and discontinued at 34000 ticks. In a preferred embodiment a timer is provided (such as a software timer programmed into the microcontroller unit) which is reset at the beginning of each linear scan, and the beginning of each linear scan is synchronized to the build envelope scanning axis boundary 104. Thus, the ticks are defined relative to a zero starting time when the timer is reset at which point the line scanning operation is at the scanning axis build envelope boundary 104. Alternatively, the ticks may be defined relative to a zero starting time at which point the line scanning operation is at a path generation reference frame border 201 as discussed below with respect to FIGS. 13-15)

In certain examples, the systems 40 and 43 for making a three-dimensional object from a solidifiable material may include a non-transitory computer readable medium (i.e., a hard disk drive or a removable non-transitory medium such as a DVD) having computer executable instructions stored on it. The systems 40 and 43 may also include one or more processors and one or more microcontrollers. The one or more microcontrollers are configured to receive instructions from the one or more processors and to selectively activate and deactivate a source of solidification energy to cause the linear solidification device to selectively supply solidification energy along the scanning (y) axis in accordance with solidification energy source event data. When executed by one of the processors, the computer executable instructions generate voxel data from the three-dimensional object data. In preferred examples, the computer executable instructions further generate solidification energy source event data from the voxel data.

When time values are used as solidification energy source event data, inaccuracies in the as-built object may occur because in practice, the scan length of solidification energy incident upon a solidifiable material per unit time may vary with the position along the scanning (y) axis. In addition, if solidification energy is supplied to a specific region along the surface of solidifiable material 50, the extent of solidification will typically extend beyond the region upon which the solidification energy is incident. Thus, in accordance with the techniques described herein, the solidification energy source event data is compensated to account for the variation in scanning length per unit time (which is referred to as the "tick size" when CPU ticks are used as the scanning time measurement) and the scan length offset caused by the relative variation between solidification length and scanning length.

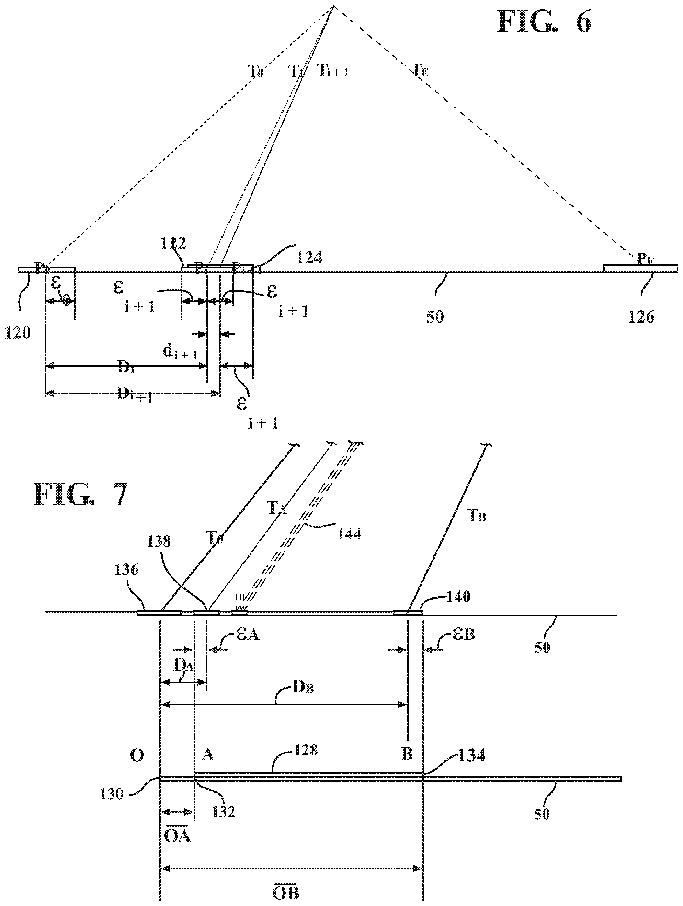

FIG. 6 illustrates an idealized depiction of the variation in solidification length offset as a function of scanning axis position. In the figure, four points $P_0$, $P_i$, $P_{i+1}$, and $P_E$ are depicted which are infinitesimally small points along the exposed surface of a solidifiable, photocurable resin 50 at which solidification energy is incident. At point Po, the solidifiable material 50 solidifies in the approximate shape of a rectangle 120 having a scanning axis length of $2\varepsilon_0$, wherein $\varepsilon_0$ may be referred to as the "offset". Point Po is at the mid-point of the solidified length. The point Po corresponds to a scanning axis time value of $T_0$ which is defined relative to a CPU clock cycle's initial value of zero.

At a scanning axis time value of $T_i$, solidification energy is received at a point $P_i$ along the surface of the solidifiable material 50 at a distance $D_i$ from point $P_0$. The solidifiable material 50 solidifies in the approximate shape of a rectangle 122 having a length of $2\varepsilon_i$, with $P_i$ being at the mid-point of the solidified length. At one time increment greater than $T_i$, i.e., at $T_{i+i}$, solidification energy is received at a point $P_{i+1}$ along the surface of the solidifiable material. The solidified material 50 solidifies in the approximate shape of a rectangle 124 having a length of $2\varepsilon_{i+1}$ with the point $P_{i+i}$ being at the mid-point. Point $P_{i+i}$ is spaced apart from point $P_i$ by a distance $d_{i+1}$. As FIG. 6 indicates, if solidification energy were received at these two adjacent points $P_i$ and $P_{i+1}$, their solidification lengths would overlap because of their offsets $\varepsilon_i$ and $\varepsilon_{i+1}$.

At scanning axis time $T_E$, solidification energy is received at point $P_E$ on the solidifiable material 50 and solidifies in the approximate shape of a rectangle having a length of $2\varepsilon_E$, with $P_E$ being at the mid-point. As illustrated in FIG. 6, if a shape is being solidified with a desired beginning point $P_0$ in a build envelope, activating a solidification energy source at time $T_0$ will produce an error in the as-built object because the starting point of the object will be offset from the point $P_0$ by an amount equal to $\varepsilon_0$. Similarly, if a shape is being solidified with an end-point of $P_E$, activating the solidification energy source at time $T_E$ will produce an error in the as-built object because the end point of the object will be offset from the end point $P_E$ by an amount equal to $\varepsilon_E$.

FIG. 7 graphically illustrates a method of accounting for the offsets to yield an object section having the desired dimensions. In FIG. 7, rectangle 136 is a solidified rectangular section 136 of solidifiable material 50 which would be produced by activating a linear solidification device solidification energy source (such as a laser diode) at an instant in time $T_0$ (e.g. a zero reference time for a CPU clock). The length A-B is the target length of a desired solidified rectangle 128 along the scanning (y) axis. Rectangle 138 is a solidified rectangular section of solidifiable material 50 which would be produced by activating a linear solidification device energy source at an instant in time $T_A$ (e.g., an elapsed time $T_A$ relative to a zero time of a CPU clock). The distance between the build envelope border 130 and the location at which solidification is intended to start 132 is OA. Based on the average scanning speed of the linear solidification device, a time value can be determined which corresponds to the distance OA. However, because of the offset $\varepsilon_A$, if that time value were used, the solidifiable material would extend beyond point 132. Thus, the time value at which solidification begins is shifted to the time corresponding to the location of point 132 plus the offset $\varepsilon_A$, which causes solidification to actually begin at point 132. Similarly, if the solidification energy source were deactivated at a time corresponding to point 134 relative to the time $T_0$, solidification would extend beyond point 134 by the offset $\varepsilon_B$. Therefore, the solidification energy source is deactivated at a time corresponding to the location of point 134 minus the offset $\varepsilon_B$, which causes solidification to end at point 134.

FIG. 6 and 7 illustrate an idealized case in which solidification energy can be projected instantaneously to a single point along solidifiable material 50 which then solidifies to a length along the scanning axis. However, in practice, the time values used to determine when to activate and deactivate a solidification energy source are integers, and the minimum time increment for turning the solidification energy source on and off is 1 time unit, e.g., 1 CPU tick if a CPU clock cycle is used. As a result, there will be a minimum length of incident solidification energy along the scanning axis per unit scanning time. In practice this minimum length will vary along the scanning axis due to the varying angle of incidence and imperfections in the linear scanning device (e.g., rotating mirror) and optics (e.g., F-theta lenses, collimators, cylindrical lenses). Thus, in the examples herein, solidification energy source event data is adjusted to also account for this variation in scanning length per unit time. In accordance with certain examples, calibration objects are created to develop a function f(t) that relates scanning lengths per unit time to position (or scanning time) along the scanning axis and which can be used to determine the offset at a particular scanning axis location.

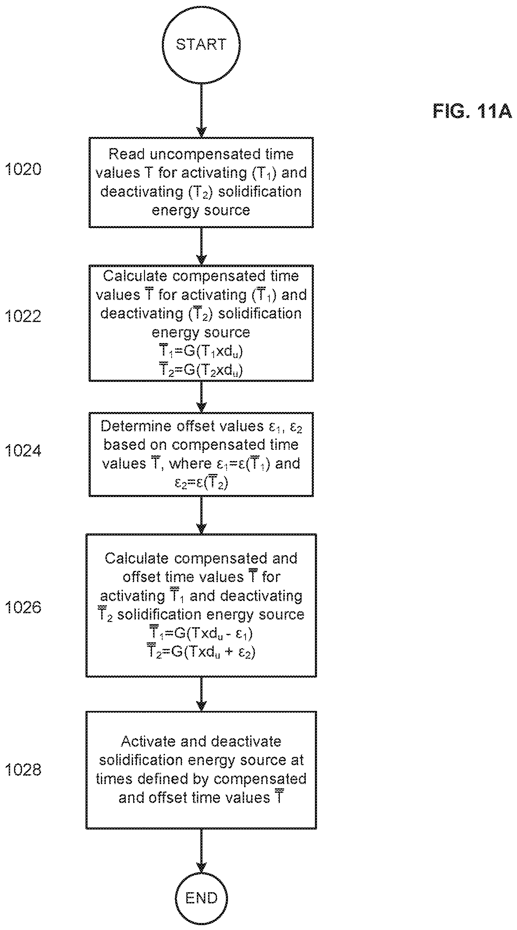

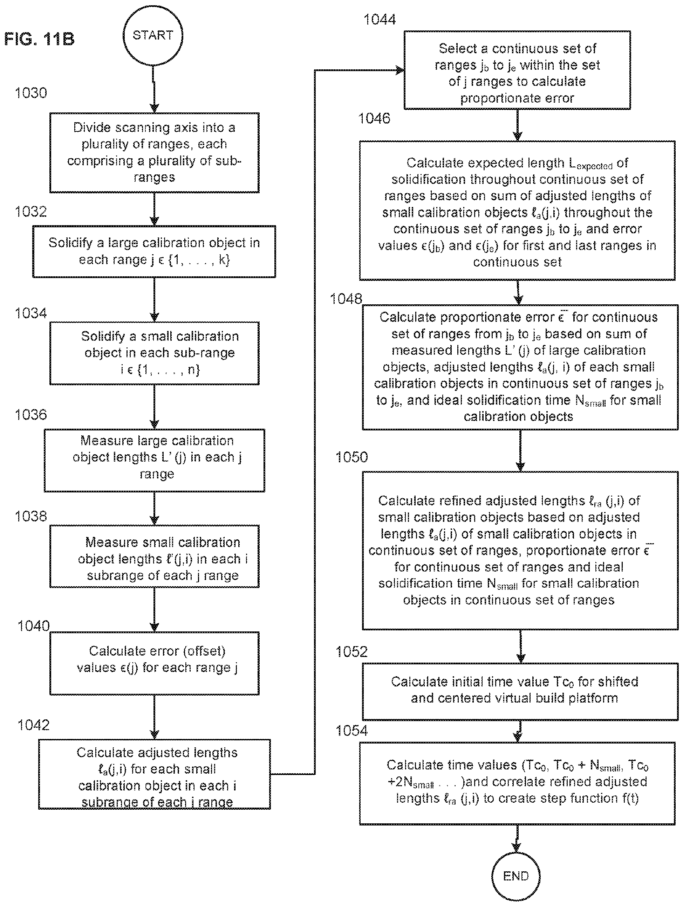

Referring to FIG. 11A, a method of forming a three-dimensional object using obtaining compensated and offset solidification energy source event data values, which are preferably time values, is depicted. In accordance with the method, a function f(t) is provided which relates the scanning axis length of incident solidification energy per unit of scanning time and the solidification scanning axis length per unit time to the scanning time. Methods of generating the function f(t) are described below with reference to FIG. 11B.

For a point on an exposed surface of a solidifiable material at a distance M along a scanning axis from a scanning axis reference point O, the scanning length y of incident solidification energy per unit time at point M may be defined as follows:

$$(1) \qquad d_{OM} = \frac{dy}{dt}\Big|_{y=OM}$$

$$(2) \qquad \frac{dy}{dt} = f(t)$$

wherein, $d_{OM}$ is the scanning axis length of incident solidification energy ("scanning length") per unit time at scanning axis distance M from reference point O;

dy/dt = rate of change of scanning length per unit time (microns/CPU tick); and
f(t) = function relating scanning length per unit time to time (microns/CPU tick).

The distance (or length) along the scanning axis from a reference point c0 at which the scanning time is $T_{c0}$ to a point at which the scanning time is t can be represented with equation (3) below:

$$(3) \qquad F(t) = \sum_{t=Tc0}^{t} f(t)\Delta t$$

wherein, F(t) is the distance (microns) of the incident solidification energy from a reference point c0 at which the scanning time is $T_{c0}$ to a point at which the scanning time is t;

$T_{c0}$ is the reference scanning time defining the beginning of the step function f(t) at which the solidification energy (e.g., laser spot) is at a reference point O within a path generation reference frame (defined below);
f(t) is a step-function relating the scanning length per unit time (microns/[CPU ticks]) to scanning time (CPU ticks); and
$\Delta t$ is the time increment (CPU ticks) of the steps defining the step function f(t).

The desired scanning axis distance (or target length) $\ell_{OM}$ from an initial scanning axis position O to a position M at which solidification is desired to begin or end may be related to an "uncompensated time value" $T_M$ (CPU ticks). The uncompensated time value assumes that the scanning length per unit time remains constant at its average value $d_u$ along the entire scanning axis. The average scanning length per unit time $d_u$ and the uncompensated time value $T_M$ may be determined as follows:

$$(4) \qquad d_u = \frac{SL_{LMAX}}{T_{LMAX}}$$

wherein, $d_u$ = average scan length/unit scanning time (microns/(CPU tick)) $SL_{LMAX}$ = maximum scanning length along the scanning (y) axis (microns); and
$T_{LMAX}$ = time required to scan the maximum scanning length (CPU ticks).

In cases where a polygonal mirror is used as a linear scanning device, if the solidification energy source (e.g., laser diode) remains active for an entire revolution, a number of scan lines will be generated which equals the number of facets of the polygonal mirror. The length of the scan lines will equal $SL_{LMAX}$.
The uncompensated time value $T_M$ may be determined from $\ell_{OM}$ and $d_u$ as follows:

$$(5) \qquad T_M = \frac{\ell_{OM}}{d_u}$$

It is desirable to determine a compensated and offset time value $\bar{T}_M$ at that will cause solidification to begin at point M (or end at point M if it is the terminal point of a continuous length of solidification). In cases where f(t) is a continuous function, the scanning axis distance of the point M at which solidification begins (or ends) from a reference point O can be related to the compensated and offset time value $\bar{T}$ as follows:

$$(6) \qquad \ell_{OM}(\bar{\bar{T}}_M) = \int_{t=Tc0}^{\bar{\bar{T}}_M} f(t)dt$$

wherein, $\ell_{OM}$ is the distance (microns) from point O to point M at which solidification begins (or ends) along the scanning axis (y);

t is the scanning time (CPU ticks);
$T_{c0}$ is the reference scanning time defining the beginning of the function f(t) at which the solidification energy (e.g., laser spot) is at a reference point O within a path generation reference frame (defined below); and $\bar{T}_M$ = compensated

and offset time value that yields solidification at point M; and

f(t) = function relating scanning length per unit time to time (microns/CPU tick).

In the case where f(t) is a discrete (step) function, the scanning axis distance of the point M at which solidification begins (or ends) from the reference point O can be determined as follows:

$$(7) \qquad \ell_{OM}(\bar{\bar{T}}_M) = \sum_{t=T_{c0}}^{\bar{T}_M} f(t)\Delta t$$

wherein, $\ell_{OM}$ is distance (microns) from point O to point M at which solidification begins (or ends) along the scanning axis (y);

$T_{c0}$ is the reference scanning time defining the beginning of the step function f(t) at which the solidification energy (e.g., laser spot) is at a reference point O within a path generation reference frame (defined below);

$\bar{\bar{T}}_M$ is the compensated and offset scanning time at which solidification energy strikes point M.

As explained further below, the compensated and offset time value $\bar{\bar{T}}_M$ is a function of a compensated but not offset time value $\bar{T}_M$, which has a corresponding offset value $\varepsilon_M$.

The compensated but not offset time value $\bar{T}$ can be related to the distance from reference point O to the point M at which solidification energy (e.g., laser light) is incident upon the solidifiable material:

$$(8) \qquad \Delta y(\bar{T}_M) = \int_{t=T_{c0}}^{\bar{T}_M} f(t)dt$$

wherein, $\Delta y$ = distance (microns) from reference point 0 to point M where solidification energy (e.g., laser spot) is incident on the solidifiable material;

$\bar{T}_M$ is the compensated but not offset time value at which solidification energy strikes point M on the solidifiable material;

$T_{c0}$ is the reference scanning time defining the beginning of the step function f(t) at which the solidification energy (e.g., laser spot) is at a reference point O within a path generation reference frame (defined below); and

f(t) = function relating scanning length per unit time to time (microns/tick);

t is the scanning time (CPU ticks).

In the case where f(t) is a discrete (step) function, the compensated but not offset time value $\bar{T}$ can be related to the distance from the reference point O to the point M at which solidification energy is incident upon the solidifiable material:

$$(9) \qquad \Delta y(\bar{T}_M) = \sum_{t=T_{c0}}^{\bar{T}_M} f(t)\Delta t$$

To use equations (8) or (9), it is useful to define a function G that relates desired scanning axis solidification energy positions $\Delta y$ to compensated time (but not offset) time values $\bar{T}$ (CPU ticks) and scanning axis solidification positons to compensated and offset time values $\bar{\bar{T}}$. The inverse function defined by solution of equation (9) may be used to determine a compensated time value $\bar{T}$ (CPU ticks) as follows:

$$(10) \qquad \bar{T} = G(T \times d_u)$$

$$(11) \qquad G(T \times d_u) = \Delta y^{-1}(\bar{T})$$

wherein, $\bar{T}$ is a compensated, but not offset time value (CPU ticks);

As used in equations (10) and (11), G is an inverse function, defined by a solution of an equation such as equations (6) or (8) and is itself a function of an uncompensated time value T (CPU ticks) and an average scanning axis scanning speed $d_u$ (microns/CPU tick).

The offset $\varepsilon$ is a function of the compensated but not offset time value $\bar{T}$. Once an offset $\varepsilon$ is determined based on $\bar{T}$, equations 6 or 7 may be used to determine a compensated and offset time value $\bar{\bar{T}}$ as follows;

$$(12A) \qquad \bar{\bar{T}} = G(T \times d_u \pm \varepsilon )$$

$$(12B) \qquad G(T \times d_u \pm \varepsilon) = \ell_{OM}^{-1} (\bar{\bar{T}})$$

wherein, $\bar{\bar{T}}$ is a compensated and offset time value (CPU ticks), and the offset value $\varepsilon$ is added to $T \times d_u$ if the solidification energy source energization event is an activation (ON) and is subtracted from $T \times d_u$ if the solidification energy source energization event is a deactivation (OFF).

As illustrated further below, as used in equations 12A and 12B, G is an inverse function, defined by a solution of an equation (such as equations (6) or (7)) relating a sum of refined and adjusted calibration object lengths (microns) to scanning axis time values (CPU ticks).

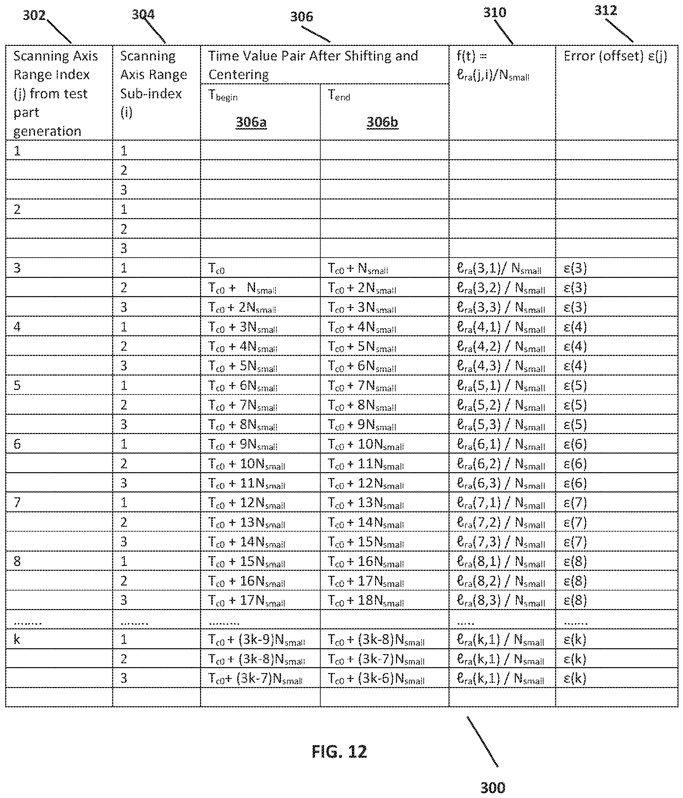

In step 1020 of FIG. 11A, equation (5) may be used to calculate uncompensated time values T from desired solidification positions $\ell$ along the scanning axis and the average scanning time $d_u$. Referring again to FIG. 11A, in step 1022 compensated but not offset time values $\bar{T}_1$ and $\bar{T}_2$ are calculated which correspond to each uncompensated time value T at which a solidification energy source activation event $T_1$ or deactivation event $T_2$, respectively occurs. In certain examples, equations (8) or (9) are used to determine the respective compensated but not offset time values $\bar{T}_1$ and $\bar{T}_2$. In step 1024 offset values $\varepsilon 1$ and $\varepsilon 2$ are determined for each solidification energy source energization event based on their respective compensated but not offset time values $\bar{T}_1$ and $\bar{T}_2$. As explained below, a database such as the one exemplified in Table 300 of FIG. 12 may be used to relate compensated but not offset time values $\bar{T}$ to a scanning axis range j and an offset value $\varepsilon(j)$ within that scanning axis range.

In step 1026 compensated and offset time values $\bar{\bar{T}}_1$ and $\bar{\bar{T}}_2$ are determined for each solidification source activation event and deactivation event, respectively using equations (6) or (7). In step 1028, the compensated and offset time values are used by a controller to selectively activate and deactivate a solidification energy source, such as a laser diode in optical communication with a linear scanning device such as a rotating polygonal mirror or a linear scanning micromirror, thereby forming the three-dimensional object.

In order to implement the method of FIG. 11A, it is necessary to determine the relationship between actual scanning lengths per unit time and positions (or scanning times) along the scanning axis where solidification is desired. The scanning length function f(t) defines this relationship. In certain examples, the scanning length function f(t) is determined by solidifying calibration objects at various locations along the scanning (y) axis and using the measured scanning axis dimensions of the calibration objects to define the scanning length function f(t) and to determine offset values $\varepsilon$. An exemplary method of developing the function f(t) is depicted in FIG. 11B.

In certain examples, three-dimensional object data for a plurality of sets of calibration objects is provided and is used to solidify a solidifiable material into the calibration objects. In step 1030 the scanning (y) axis is divided into a plurality of scanning time ranges, each having a unique range index value j, and each range is further divided into sub-ranges, each sub-range having a sub-range index value i.

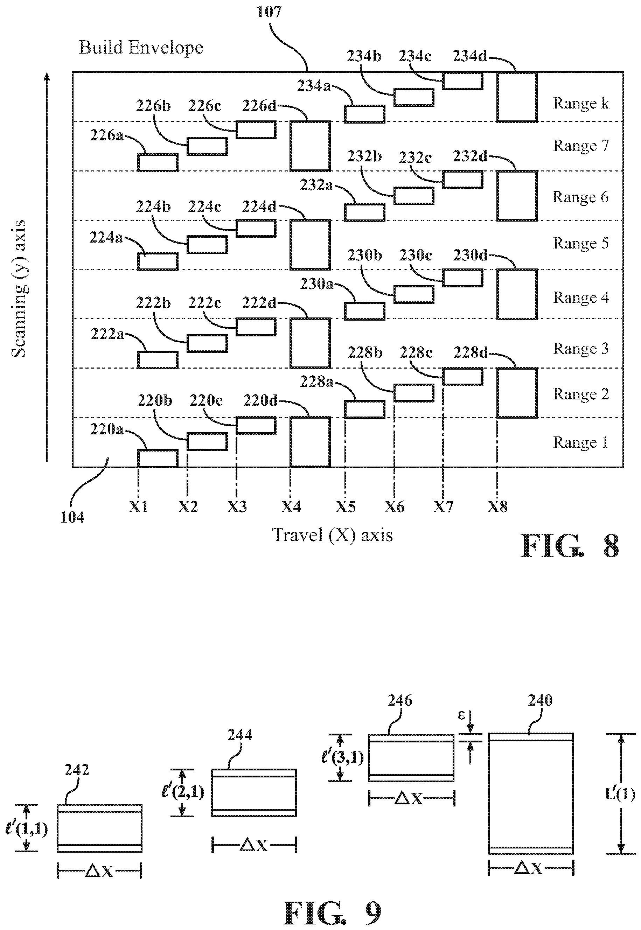

In step 1032 a large calibration object covering each scanning range j=1 to k is solidified. In step 1034 a small calibration object is solidified in each sub-range i=1 to n. In certain preferred examples, the calibration objects are grouped into sets, wherein each set occupies a range and comprises a large object and a plurality of small objects. The small calibration parts are preferably defined by sets of uncompensated time values that define a continuous, uninterrupted set of uncompensated time values along the scanning axis. Similarly, the large calibration parts preferably cover a continuous, and uninterrupted range of uncompensated time values along the scanning axis. Ideally, the resulting small calibration parts would appear as in FIG. 8 and cover the entire set of scanning axis ranges without overlapping and without discontinuities. However, due to the offsets and variations in scanning length per unit time, that is typically not the case. The same is true for the large calibration parts.

Each large calibration part is preferably defined by a set of uncompensated time values that is continuous within its range and which covers the entirety of the range. Similarly, the small calibration parts within a given range are preferably defined by a set of uncompensated time values that are continuous within their range and which cover the entirety of that range.

Exemplary groupings of small and large calibration objects into sets are shown in FIG. 8. Referring to the figure, a build envelope 107 is depicted in which a plurality of small calibration objects 220a-c, 222a-c, 224a-c, 226a-c, 228a-c, 230a-c, 232a-c, and 234a-c and large calibration objects 220d, 222d, 224d, 226d, 228d, 230d, 232d, and 234d are depicted. Small calibration objects 220a-220c are defined by a continuous range of the scanning axis within range 1, with each small calibration object 220a-220c occupying its own distinct sub-range. Thus, small calibration object 220a is in sub-range 1 of range 1, small calibration object 220b is in sub-range 2 of range 1, and small calibration object 220c is in sub-range 3 of range 1. There are no scanning axis gaps between the border of small calibration objects 220a and 220b. Nor are there scanning axis gaps between the border of small calibration objects 220b and 220c. The large calibration object 220d extends the entire length of range 1. The remaining sets of small and large calibration objects are configured similarly.

The depictions of the small and large calibration objects in FIGS. 8 are idealized and are used to generate uncompensated time values in accordance with equations (4) and (5). Each small test calibration object has an ideal or target length $\ell$ (j,i) based on its object data. Each large calibration object has an ideal length L(j). The average scanning length per unit time $d_u$ may be determined in accordance with equation (4) as described previously and used with equation (5) and lengths $\ell$(j, i) and L(j) to determine uncompensated time value pairs (Tb, Te) for each calibration object, with the first value (Tb) defining the time at which the solidification energy source is activated and the second value (Te) defining the time at which the solidification energy source is deactivated.

In reality, the scanning length per unit time d will vary with position along the scanning (y) axis, and at any given location will not necessarily equal the average scanning length per unit time $d_u$. Also, each calibration object will also have an associated offset $\varepsilon$. For this reason, within a given scanning axis range, the small calibration objects are spaced apart from one another along the travel (x) axis and from the large calibration object along the travel (x) axis so that they do not fuse together (see e.g., small calibration objects 220a-220c and large calibration object 220d which are spaced apart from one another along the travel (x) axis). Referring again to FIG. 8, between Range 7 and Range k, a number of additional ranges will be provided but have been omitted for ease of illustration. Those ranges that are depicted are merely exemplary. Although not shown in the figures, multiple sets of calibration objects may be provided within a given scanning axis range as long as they are spaced apart from one another along the travel (x) axis and spaced apart along the travel (x) axis from the set of calibration objects occupying the next sequential range along the scanning (y) axis. The use of such multiple sets of calibration objects within a given range can be used to ensure the statistical significance of the test results and to account for fluctuations and anomalies in the test object dimensions.

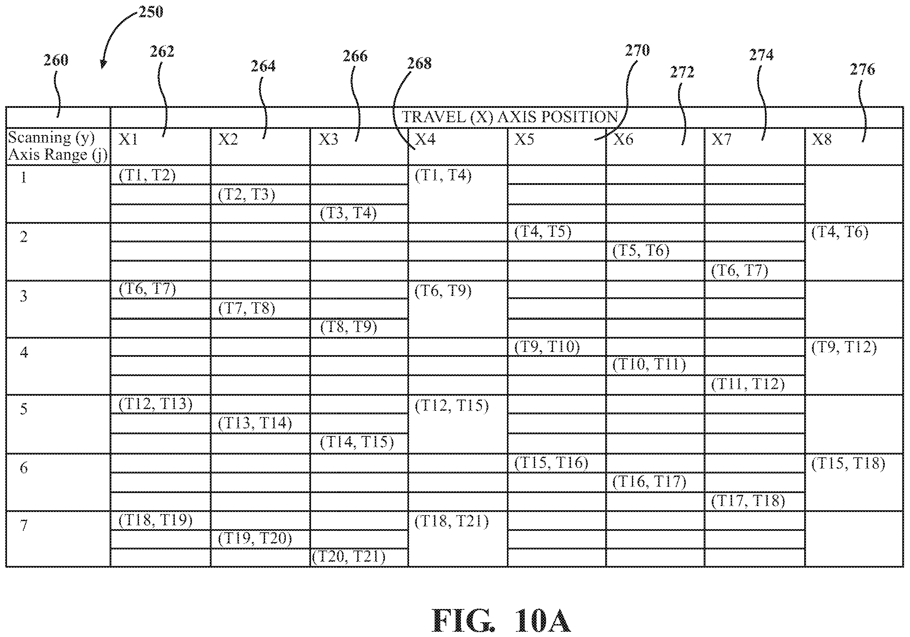

FIG. 10A depicts exemplary uncompensated time value pairs that define the small and large calibration objects of FIG. 8. Time value pairs for the first seven (7) scanning axis ranges of FIG. 8 are shown in table 250 of FIG. 10A. Eight travel (x) axis positions each correspond to one of the columns 262-276 and define the beginning travel (x) axis position at which one of the calibration objects begins. Column 260 lists the scanning axis range j = 1 to 7. Each range has three rows associated with it, one for each of the sub-ranges having an index value of i=1 to 3. Column 262 includes the object data for small calibration objects 220a, 222a, 224a, and 226a. Column 264 includes the object data for small calibration objects 220b, 222b, 224b, and 226b. Column 266 includes the object data for small calibration objects 220c, 222c, 224c, and 226c. Column 268 includes the object data for large calibration objects 220d, 222d, 224d, and 226d. Column 270 includes the object data for small calibration objects 228a, 230a, and 232a. Column 272 includes the object data for small calibration objects 228b, 230b, and 232b. Column 274 includes the object data for small calibration objects 228c, 230c, and 232c. Column 276 includes the object data for large test objects 228d, 230d, and 232d.

In each column 262-276, pairs of time values are given. The first time value in each pair defines a time at which the solidification energy source (e.g., laser diode) of a linear solidification device is activated, and the second time value defines a time at which the solidification energy source is deactivated. These time values are configured so that solidification occurs continuously within each range j, albeit with the objects arranged in a staggered fashion along the travel (x) axis. So, for example, object 220a is defined by time value pair T1, T2, which causes a solidification energy source to be activated at time T1 and deactivated at time T2 while the linear solidification device is a location x1 (and for some distance thereafter along the x-axis so that the object has a width along the x-axis). When the linear solidification device reaches location x2 along the travel axis, the solidification energy source is activated at time T2 and deactivated at time T3. When the linear solidification device reaches location x3 along the travel axis, the solidification energy source is activated at time T3 and deactivated at time T4. Each of these time values is an uncompensated time value that is determined based on the object layout shown in FIG. 8 which assumes that the small calibration objects 220a, 220b, and 220c cover the full extent of range 1 without any scanning axis discontinuities (there are travel axis discontinuities because the objects are spaced apart from one another along the travel axis). When the linear solidification device reaches location x4, the solidification energy source is activated at time T1 and deactivated at time T4 to form large calibration object 220d. The other sets of small and large calibration objects are configured similarly so that the small calibration objects in each range are defined by time values that cover the entirety of the range and so that the large calibration object in each range covers the entirety of the range.

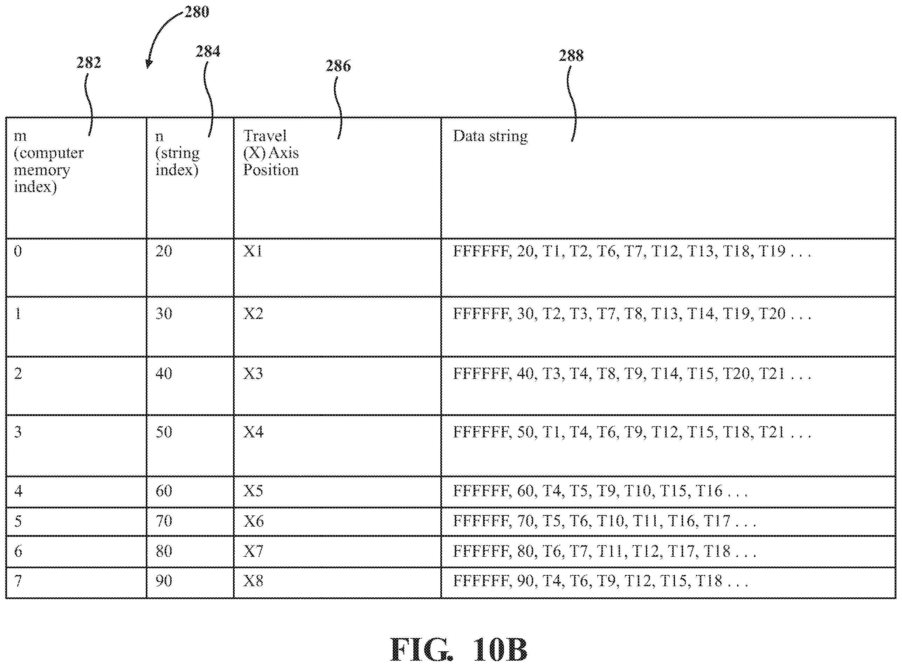

FIG. 10B depicts exemplary data strings based on FIG. 10A which are used to form the small and large calibration objects of FIG. 8. Column 282 lists the computer memory index m for each data string, which identifies those strings that include solidification energy source event data in sequence. Column 284 lists a string index value n which corresponds to the travel axis (x) position shown in column 286. Column 288 includes the data strings themselves. Each data string includes a hexadecimal start code (FFFFFF), the string index value n, and a series of time values, each of which corresponds to a change in the energization state of the solidification energy source. Referring to the first data string corresponding to memory index m=0, the solidification energy source is activated at time T1, deactivated at time T2, activated at time T6, deacativated at time T7, activated at time T12, deactivated at time T13, activated at time T18, and deactivated at time T19. The other data strings are used similarly at the other travel (x) axis positions listed in column 286.

When the time values of Table 250 in FIG. 10A are used to solidify calibration objects (steps 1032 and 1034), the as-produced parts will vary dimensionally from the ideal dimensions shown in FIG. 8. In step 1036 the actual scanning axis lengths L'(j) of the large calibration objects are measured. In step 1038 the actual scanning axis lengths $\ell'$(j, i) of the small calibration objects are measured.

An exemplary set of as-built small calibration objects 242-246 and a large calibration object 240 are shown in FIG. 9. The objects correspond to idealized small calibration objects 220a-220c and idealized large calibration object 220d shown in FIG. 8. Small calibration object 242 corresponds to sub-range 1 of range 1. When the solidification energy source is activated at time T1 and deactivated at time T2 (along the travel axis length $\Delta$x), the resulting rectangular block has a scanning axis length of $\ell'$(1,1). The expected length based on the time interval from T1 to T2 and the average scanning length per unit time $d_u$ is $\ell$(1,1). Each of the small calibration objects 242, 244, and 246 has an expected length $\ell$(j,i) and an actual length $\ell'$(j,i) where i is a sub-range index and j is a range index. The solidified objects are rectangular blocks, and the actual lengths $\ell'$(j,i) are determined using calipers or other suitable measurement techniques to measure the distance between their faces that are parallel to the x-z plane (i.e., perpendicular to the scanning (y) axis). As shown in FIG. 9, the actual lengths of the objects differ from the ideal lengths by two times the offset.

Both the scanning length per unit time d and the offset $\varepsilon$ may vary with scanning axis position. In order to calculate values for each, it is assumed that the offset $\varepsilon$ within each range j is constant (i.e., it is assumed that the offset does not vary among the sub-ranges i within a given range j). Based on this assumption an offset for each range $\varepsilon$(j) may be calculated as follows:

$$(13) \qquad \varepsilon(j) \ = \frac{1}{2(1-n)} \left( L'(j) - \sum_{i=1}^{n} \ell'(j,i) \right)$$

wherein, $\varepsilon$(j) is the offset (microns) for range j;

n is the number of sub-ranges within the range j;
i is the sub-range index having values from 1 to n;
$\ell'$(j,i) is the measured length (microns) of the small calibration object in the ith sub-range of the jth range; and
L'(j) is the measured length (microns) of the large calibration object in the jth range.

Based on the results of step 1040, in step 1042 adjusted lengths $\ell_a$(j,i) can be calculated for each small calibration object as follows:

$$(14) \qquad \ell_a(j, i) = \ell'(j, i) - 2\varepsilon(j)$$

wherein, $\ell_a$(j,i) is the adjusted small calibration object length (microns) for the ith sub-range of the jth range;

$\ell'$(j,i) is the measured calibration object length (microns) for the ith sub-range of the jth range;
$\varepsilon$(j) is the off-set for the jth range.

The adjusted small calibration object length $\ell_a$(j,i) accounts for the portion of the measured part length $\ell'$(j,i) that differs from the ideal part length $\ell$(j,i) due to the variation in scanning length per unit time, whereas the offset $\varepsilon$(j) accounts for the variation in solidified length versus scanned length. However, the foregoing calculations are premised on the assumption that the offset $\varepsilon$(j) is constant throughout each scanning axis range j. If this assumption were entirely valid, as shown in FIG. 16 one would expect the sum of the measured lengths L'(j) of the large test calibration objects within a consecutive set of h ranges from $j=j_b$ to $j_e$ to equal the sum of the small calibration objects within those ranges plus the offsets $\varepsilon$(j) for the first and last ranges, i.e.:

$$(15) \qquad \sum_{j=j_b}^{j_e} L'(j) = \varepsilon(j_b) + \varepsilon(j_e) + \sum_{j=j_b}^{j=j_e} \sum_{i=1}^{i=n} \ell_a(j, i)$$

wherein, $\ell_a$(j,i) is the adjusted length (microns) of the small calibration object in ith sub-range of the jth range;

L'(j) is the measured length (microns) of the large calibration test block in the jth range;
$j_b$ is the range index value for the first range in a consecutive series of h ranges;
$j_e$ is the range index value for the last range in a consecutive series of h ranges;
$\varepsilon(j_b)$ is the offset value (microns) for range $j=j_b$;
$\varepsilon(j_e)$ is the offset value (microns) for the range $j=j_e$;

The left-hand side of equation (14) may be referred to as the "expected length" $L_{expected}$ of the sum of the lengths of the large calibration objects in the ranges from $j=j_b$ to $j=je$. In step 1046 (FIG. 11B) the expected length is calculated for the h continuous ranges in the interval $j=j_b$ to $j=j_e$.

The right-hand side of equation (14) can be subtracted from the left-hand side to calculate a proportionate error $\bar{\varepsilon}$ $(j_b,j_e)$ over the continuous range interval $j_b$ to $j_e$. The proportionate error is then used to calculate a refined adjusted length $\ell_{ra}(j,i)$. The proportionate error over the h consecutive scanning axis ranges is distributed to the ranges lying within $j_b$ to $j_e$ to arrive at the refined adjusted length $\ell_{ra}(j,i)$. The proportionate error may be calculated as follows:

$$(16) \quad \delta(j_b, j_e) = \sum_{j=jb}^{je} L'(j) - [\, \varepsilon(j_b) + \varepsilon(j_e) + \sum_{j=jb}^{j=je}\sum_{i=1}^{i=n} \ell_a(j,i)\,]$$

wherein, $\delta(j_b,j_e)$ is the error in the continuous interval of h ranges from $j_b$ to $j_e$.

In step 1048 the proportionate error $\bar{\varepsilon}$ $(j_b, j_e)$ for the continuous range of intervals from $j=j_b$ to $j=j_e$ is calculated. The proportionate error for each unit of scanning time (e.g., CPU tick) may be calculated as follows:

$$(17) \qquad \bar{\varepsilon}(j_b, j_e) = \frac{\delta\,(j_b,j_e)}{[\mathrm{T}\,(j_e) - \mathrm{T}(j_e)]}$$

wherein, $\bar{\varepsilon}$ $(j_b, j_e)$ is the proportionate error (microns/[CPU tick]) in the continuous interval of h ranges from $j=j_b$ to $j=j_e$;

T(je) is the uncompensated scanning time value (CPU ticks) that corresponds to the ideal end scanning axis position (e.g., FIG. 8) of the large calibration test block in range $j=je$;
T(jb) is the uncompensated scanning time value (CPU ticks) that corresponds to the ideal beginning scanning axis position of the large calibration test block in range $j=j_b$.

In step 1050 the proportionate error is used to determine refined adjusted lengths $\ell$ra(j,i) for each small calibration object lying within the continuous interval of h ranges from $j_e$ to $j_b$ in step 1050:

$$(18) \qquad \ell_{ra}(j,i) = \ell_a\,(j,i) + (\bar{\varepsilon}(j_b, j_e)(N_{small}))$$

wherein, $\ell_{ra}$ (j,i) is the refined and adjusted length (microns) of the small calibration object in the ith sub-range of range j;

$\ell_a(j,i)$ is the adjusted length (microns) of the small calibration object in the ith sub-range of range j;
$\bar{\varepsilon}$ $(j_b, j_e)$ is the proportionate error (microns/[CPU tick]) in the continuous interval of ranges from $j=j_b$ to $j=j_e$;
$N_{small}$ is the time interval (CPU ticks) from the uncompensated time at which solidification begins until the uncompensated time at which solidification ends for each of the small calibration objects.

The uncompensated time values T, compensated time values $\bar{T}$, and compensated and offset time values $\bar{\bar{T}}$ described above are defined relative to a zero time that defines the scanning axis border of an actual, physical build envelope or path generation reference frame. In practice, the area occupied by an object or set of objects being built is often less than the area defined by the path generation reference frame and can be described as a "virtual build platform" 200 (FIG. 15). If the compensated and offset time values as previously described up to this point were used, the virtual build platform 200 would be effectively located at the scanning axis border 201 of the path generation reference frame 204 as illustrated by the solid rectangle in FIG. 15 because the time values are defined relative to a time value of zero at which the solidification energy (e.g., laser spot) strikes the path generation reference frame border 201). As will be described further below with reference to FIGS. 13-15, it can be desirable to shift the virtual build platform 200 within the path generation reference frame 204 so that the when the objects 202a, 202b, 202c are built, the virtual build platform 200 is symmetrical about the mid-point of the scanning axis (located at $SL_{LMAX}/2$ in FIG. 15). Actual three-dimensional object forming apparatuses that use linear solidification devices comprising a laser diode and a rotating polygonal mirror will also have scanning axis shift (identified as SHIFT in FIG. 15) which is accounted for by off-setting the virtual build platform 200. The shifting of the virtual build platform is carried out by shifting the time values used to direct the selective activation of the solidification energy source in the linear solidification device so that the scanning axis border of the virtual build platform 206 is shifted relative to the scanning axis border 201 of the path generation reference frame.

Returning to FIG. 11B, in step 1052 a shifted and centered initial time value $T_{c0}$ is calculated for the shifted and centered virtual build platform 200 as follows:

$$(19) \quad T_{c0} = 0.5T_{LMAX} - \frac{1}{d_u}[(0.5)SL_{LMAX} + SHIFT]$$

wherein, $T_{LMAX}$ is the scanning time (CPU ticks) required to scan a line of solidification energy along the entirety of the maximum scan length

$SL_{LMAX}$;
$SL_{LMAX}$ is the maximum scan length (microns) along the scanning axis; and
SHIFT is an observed shift in the scanning (y) axis location (microns) at which solidification energy strikes the solidifiable material when the uncompensated time value corresponding to the shifted scanning axis border 206 (FIG. 15) is used relative to the desired position of scanning axis border along the scanning axis.

In step 1054 time values are calculated that are used to determine the time value ranges and sub-ranges used to define the step function f(t). To create the small calibration objects of FIG. 8, the objects are designed with a specific scanning axis length, target_bar_size. The time increment for each small calibration object $N_{small}$ can be calculated from the target_bar_size and the average scanning speed $d_u$ as follows;

$$(20) \quad N_{small} = target\_bar\_size/d_u$$

wherein, $N_{small}$ is the time interval (CPU ticks) used to solidify the small calibration objects;
target bar size is the ideal scanning axis length (microns) of each small calibration object (e.g., the scanning axis lengths shown in FIG. 8); and $d_u$ is the average scanning speed along the scanning axis (microns/CPU tick).

The value of $N_{small}$ should correspond to the difference in the values of the members of each time value pair shown in FIG. 10A for the small calibration objects (e.g., T2-T1, T3-T2, etc.).

Referring to Table 300 in FIG. 12, a series of beginning (column 306a) and ending (column 306b) time values starting at $T_{c0}$ can be generated which will define f(t). The difference between each beginning and ending time value in each row is $N_{small}$. These time values can be related to the scanning axis index j and sub-index i values shown in FIG. 10A, as illustrated in FIG. 12. This relation, in turn, allows the refined and adjusted small calibration object lengths $\ell_{ra}(j,i)$ for each scanning axis range j and sub-range j to be related to the time values shown in columns 308a and 308b. The time values in columns 308a and 308b and the refined and adjusted small calibration object lengths $\ell_{ra}(j,i)$ in column 310 define the step function f(t). Using known numerical methods, such as functions provided in the C++ computer language, the inverse function, defined by a solution to equation (8), which may be referred to as G(*), can be determined. The function G(*) is a mapping defined by the solution of integral equation (8). The rule of mapping G:X→ G(X) is defined as follows: for a point X (which is a parameter in equation (8), G(X) is defined as the solution $\bar{T}_M$ for equation (8).

Referring to an exemplary implementation of steps 1022-1026 of FIG. 11A, as shown in FIG. 12, each range j has an offset value ε(j) that is constant within the i sub-ranges of the range. Using an uncompensated time value T and the average scanning speed $d_u$, in step 1022 the inverse function $G(Txd_u)$ can be used to determine the compensated time values $\bar{T}1$ for activating the solidification energy source and compensated time values $\bar{T}_2$ for deactivating the solidification energy source. Each compensated time value $\bar{T}1$ and $\bar{T}_2$ can then be related to an offset value ε(j) via Table 300 in FIG. 12. Once the offset value ε(j) is known, step 1026 of FIG. 11A can be carried out by determining the value of the inverse function G(x), where x is the uncompensated time value $\bar{T}$ times the average scanning speed $d_u$ plus or minus the offset ε, i.e., by determining G($\bar{T} \pm$ ε(j)), where +ε(j) is used for solidification energy source activation (ON) events and -ε(j) is used for solidification energy source deactivation (OFF) events.

As indicated previously, and as also discussed in the incorporated application, U.S. Patent Application No. 14/091,683, the method of generating solidification energy source event data (e.g., uncompensated time values T) involves a step of translating the three-dimensional object data from a reference coordinate system to a path generation reference frame 204. FIG. 13 is a flow chart describing one example method by which this process can be carried out. In the invention herein, the method of FIG. 13 is carried out to determine a reference scanning time value $T_{c0}$ that is used to generate the step function f(t). In certain preferred examples, the method of FIG. 13 is implemented in a system in which the linear solidification device 42 is centered along the scanning axis length of build envelope 102 and the three-dimensional object being built is also centered with respect to the scanning axis mid-point of linear solidification device 42. Especially in those implementations that use solidification times such as CPU tick values as solidification energy source event data, this configuration is preferred. To maintain centering with respect to scanning axis mid-point of the linear solidification device, the method of FIG. 13 uses a "path generation reference frame" with a travel (x) axis length equal to a scene size plus a margin and a scanning (y) axis length equal to the maximum possible scan length of the linear solidification device. A "scene" is a graphical representation of a defined area that includes one or more three-dimensional objects to be built during a given three-dimensional object manufacturing process. The scene size is the size of a bounding box that encompasses the objects comprising the scene and may not exceed the size of the build envelope. The method further defines a "virtual build platform" used to calculate solidification energy source event data values (e.g., CPU ticks) that will ultimately center the three-dimensional object at the scanning (y) axis mid-point of the linear solidification device 42 and the mid-point of the actual build envelope 104 (i.e., the mid-point between the scanning axis borders 104 and 107 of FIG. 5A. Thus, as used herein, the "path generation reference frame" is a reference coordinate system that relates voxel data to actual positions in a system for making three-dimensional objects, such as those illustrated in FIGS. 1A, 1B, and 8. The actual positions can be related to uncompensated time values through the use of the average scanning axis scanning speed $d_u$ and equation (4).

The use of a path generation reference frame as described herein ensures that three-dimensional objects will be built within the build envelope 102 (FIG. 5A) of the particular apparatus being used to manufacture the objects. In preferred examples, the scanning (y) axis length of the path generation reference frame equals the maximum length that solidification energy could traverse the scanning (y) axis based if solidification energy is projected along the entire length of any of the facets of a rotating polygonal mirror and deflected onto the travel axis/scanning axis plane. The origin and terminal points of the path generation reference frame will not necessarily be within build envelope 104 or even within the area of the travel axis/scanning axis plane where solidifiable material is located.

As indicated with respect to FIGS. 1A and 1B, systems and apparatuses suitable for use with the methods described herein include a build platform 44, 70 on which a three-dimensional object is progressively built and a linear solidification device 42 aligned with the build platform 44, 70 along the scanning (y) axis which is movable over along the travel (x) axis through the same travel (x) axis region occupied by the build platform 44, 70. The build platform 44, 70 includes the actual build envelope 102 of FIG. 5A and defines a maximum x-y area upon which a three-dimensional object may be built.

FIG. 14 depicts an illustrative example of a virtual build platform 200 having a length $L_{VX}$ along the travel (x) axis and a length $L_{VY}$ along the scanning (y) axis. Images 202a-202c of models of three-dimensional objects defined by three-dimensional object data are positioned within the virtual build platform.

FIG. 15 depicts an illustrative example of a path generation reference frame 204. The path generation reference frame 204 has a length along the scanning (y) axis of $SL_{LMAX}$ which is the maximum scan line length of the linear solidification device 42 along the scanning (y) axis. When linear solidification device 42 is installed on an actual apparatus for making three-dimensional objects, the location and geometry of the rotating energy deflector 120 and the length and position of housing opening 125 become fixed in space, as does the spacing between the exposed surface of the solidifiable material and the linear solidification device housing opening 125. As a result, a scanning axis border 201, representing the first possible location along the scanning axis at which solidification energy could be transmitted to the solidifiable material, is defined. In certain implementations described herein, the border of the scanning axis border 104 of build envelope 102 (and the corresponding border 206 of the virtual build platform) will be spaced apart along the scanning (y) axis from the scanning axis border 201 of the path generation reference frame. In addition, the length of the build envelope 102 along the scanning (y) axis (and of the length of the virtual build envelope) will be less than the length $SL_{LMAX}$ of the path generation reference frame scanning axis.

The value of $SL_{LMAX}$ can be determined by activating the solidification energy source 126 as the rotating energy deflector 120 rotates so that solidification energy is deflected off the entire length of at least one of the facets 122a-122f. The path generation reference frame has a maximum travel axis (x) length defined by the scene size plus a specified margin. As indicated previously, the scene size preferably does not exceed the size of the build envelope 102 along either the travel (x) or scanning (y) axis to ensure that the three-dimensional object(s) defined within the scene are built within the build envelope 102. The virtual build platform 200 is shown at three different path generation reference frame 204 locations (as indicated in threeboxes within the path generation reference frame 204) in FIG. 15. Each box shows a different possible position of the virtual build platform 200 within path generation reference frame 204. The virtual build platform has a first scanning (y) axis border 206 along the path generation reference frame 204 scanning (y) axis and a second scanning (y) axis border 208 long the path generation reference frame 204 scanning (y) axis. The borders 206 and 208 are spaced apart by a fixed distance but will move to different scanning (y) axis locations within the path generation reference frame 204 when the virtual build platform 200 is repositioned within the path generation reference frame 204. If the solidification energy source 126 remains activated as the rotating energy deflector 120 rotates, each scan line would start at scanning axis border 201 and end at a location spaced apart from the scanning axis border 201 by $SL_{LMAX}$. However, in actual operation to make a three-dimensional object, full length scan lines 108 (FIG. 5B) begin at scanning axis border 104 and end at scanning axis border 107 by appropriately adjusting the activation of solidification energy source 126.

Referring again to FIG. 13, in step 1120 a virtual build platform 200 such as the one illustrated in FIG. 14 is defined with a travel axis length $L_{VX}$ and a scanning axis length $L_{VY}$. In certain examples, the values of $L_{vx}$ and $L_{vy}$ are determined based on the dimensions of the build platform 44 and/or other hardware or software restrictions. In one example, an apparatus is provided with a linear solidification device mounted above a build platform such that 66,000 cpu ticks (theoretically) corresponds to a scanning (y) axis solidification length of 250mm. Thus, *Lvy* is less than or equal to 250mm. However, due to the hardware set-up and the construction of the linear solidification device, the working range of time values (CPU ticks) during which solidification along the scanning (y) axis is possible is 5000 to 50,000 CPU ticks. This range will limit *Lvy to* a value of about 170mm. *Lvy* is chosen to be close to this value and is set at 160mm. The memory of the control unit used to toggle the solidification energy source is also limited to 8MB, which constrains the number of solidification energy source events (e.g., toggle events) per layer. The memory restriction affects both *Lvy* and *Lvy.* However, Lvx is not limited by mechanical or hardware limitations, but rather, only by the memory limitation. Based on this limitation and the selected value of *Lvy, Lvx* is selected to be 250mm.

In step 1122 three-dimensional object data defining the three-dimensional object is provided and is placed within the virtual build platform 200. Although this is step is illustrated graphically in FIG. 14, it is performed mathematically by relating the reference coordinate system that defines the three-dimensional object data (e.g., the STL file reference coordinate system) to the virtual build platform 200 reference coordinate system (e.g., the x-y axes in FIG. 14) and making the appropriate x, y translations of the three-dimensional object data. If the three-dimensional object data has been converted to uncompensated time values, equation (19) may be used.

In step 1124 a path generation reference frame is defined with a scanning (y) axis length of $SL_{LMAX}$ and a travel (x) axis length equal to the scene size plus a margin. The virtual build platform 202 is then centered within the path generation reference frame 204 in step 1126. This is depicted graphically in FIG. 15 by the movement of the virtual build platform 200 shown in solid lines at the lower left-hand corner of the path generation reference frame 204 to the center of the path generation reference frame 204 as indicated by the upper box in dashed lines with the text "After Offsetting." In certain preferred examples, the use of the centering step 1126 helps ensure that the three-dimensional object(s) is produced within build envelope 102 (FIG. 5A).

As discussed previously, based on the average scanning speed $d_u$ in mm/sec or microns/sec of the linear solidification device 42 along the scanning (y) axis, one could predict the CPU tick value at which the border 206 (i.e., the border 206 for the upper dashed box) would be reached:

$$(21) \quad t(206) = y(206)/d_u$$

wherein, *t(206)* equals the uncompensated solidification (scanning) time relative to a the beginning of a scan line at path generation reference frame border 201 (CPU ticks);

*y(206)* = the expected distance between the border 206 of the upper dashed box in FIG. 14 and the path generation reference frame border 201 (mm or microns); and

$d_u$ = average scanning speed along the scanning (y) axis (mm/CPU ticks or microns/CPU ticks).

In certain systems for making three-dimensional objects, the relationship of equation (6) will not hold because of hardware imperfections, variations in the size of the area upon which the solidification energy is incident at each tick value, and other factors. In step 1128, the virtual build platform 200 is shifted along the scanning (y) axis of the path generation reference frame to account for an observed shift in the area of solidification along the scanning (y) axis as follows:

$$(22) \quad t(206)_{shift} = (y(206) + Shift)/d_u$$

wherein, y(206) is defined as above for equation (20),

Shift = an observed shift in the scanning (y) axis location (mm or microns) at which solidification should begin (e.g., a scanning axis edge of build platform 44 when solidification energy is transmitted at *t(206)* relative to *y(206); and*

$t(206)_{shift}$ = the solidification time (in CPU ticks) that causes solidification energy to be received at y(206) relative to a zero solidification time value at path generation reference frame border 201.

Thus, if the actual build envelope 104 is centered within the path generation reference frame of the system for making a three-dimensional object, shifting the virtual build platform 200 along the scanning (y) axis to account for the *Shift* should ultimately center the actual build envelope at the scanning axis mid-point of the linear solidification device 42. Thus, along with centering step 1126, offsetting step 1128 aids in ensuring that the three-dimensional object or objects within a given scene are built within build envelope 102 (FIG. 5A).

The completion of step 1128 yields three-dimensional object data that is oriented within a virtual build platform 200 at a specific location within a path generation reference frame 204. Step 1128 can also be carried out to center the virtual build platform 200 using compensated and offset time values $\bar{T}$ as described previously with respect to step 1052 of FIG. 11B.

Referring to FIG. 7, an example of using the method of FIG. 11A will be described. In accordance with the example, it is desired to solidify a length 128 of solidifiable material from a point A to a point B along the scanning axis. Thus, point A is a location at which the solidified length is to begin and point B is the location at which the solidified length is to end.

The solidified length has a dimension into the page along the x-axis which is not visible and is part of a three-dimensional object defined by voxel data. Scanning axis points A and B define scanning axis distances relative to a reference point O. The physical distance from point A to point B as dictated by the voxel data and is represented as $\ell_{AB}$ (e.g., in microns or millimeters). The distance of point A from the reference point O is represented as $\ell_{AO}$ (microns or millimeters), and the distance of point B from the reference point O is represented as $\ell_{BO}$.

Using equation (5) with an average scanning speed $d_u$ determined in accordance with equation (4), the uncompensated time values $T_A$ and $T_B$ are calculated ($T_A = \ell_{AO}/d_u$ and $T_B = \ell_{BO}/d_u$). The compensated but not offset time values $\bar{T}_A$ and $\bar{T}_B$ are then determined using equations (3), (9)-(11) with the step function f(t) defined by FIG. 12. In FIG. 12, the compensated but not offset time values will each correspond to respective ranges $j_a$ and $j_b$. The respective ranges $j_a$ and $j_b$ may be the same range or different because different because the offsets are presumed to be constant within all i= 1 to n sub-ranges of a given range. Thus, offsets $\varepsilon(j_a)$ and $\varepsilon(j_b)$ may be determined from FIG. 12. Once the offsets $\varepsilon(j_a)$ and $\varepsilon(j_b)$ are determined, equation (12) may be used to determine the compensated and offset time value for point A: $\bar{T}_A = G(Txd_u + \varepsilon(j_a))$. Equation (11) may also be used to determine the compensated and offset time value for point B: $\bar{T}_B = G(Txd_u - \varepsilon(j_b))$. Referring to FIG. 7, the segment 138 represents the solidification length obtained when solidification is carried out at the scanning axis coordinate defined by point A plus the offset value $\varepsilon(j_a)$ (shown as $e_A$ in the figure). By offsetting the location at which the solidification energy source is activated by the positive value of the offset $\varepsilon(j_a)$, even though the solidification energy first strikes the solidifiable material at a distance of $\ell_{OA} + \varepsilon(j_a)$ the solidifiable material solidifies in the negative direction by the amount $\varepsilon(j_a)$ so that solidification actually begins at point A. The length of segment 138 reflects (in an exaggerated way) the value of the scanning axis length/unit time function f(t) at point A. Similarly, by offsetting the location at which the solidification energy source is deactivated by the negative value of the offset $\varepsilon(j_b)$, the solidifiable material solidifies in the positive direction by the amount $\varepsilon(j_b)$ so that solidification actually ends at point B. The length of segment 140 in FIG. 7 reflects (in an exaggerated way) the value of the scanning axis length/unit time function f(t) at point B.

## Claims

1.  A method of making a three-dimensional object, comprising:

    providing object data representative of a three-dimensional object, wherein the object data defines locations in a reference coordinate system where the object is located, the reference coordinate system comprising a travel axis, a scanning axis, and a build axis;
    converting the object data to sets of uncompensated time values T, wherein each set of uncompensated time values corresponds to a location along the build axis,
    and each uncompensated time value corresponds to a location at which solidification begins or ends along the scanning axis;
    providing a step function f(t) that relates the scanning length per unit time of a linear solidification device to scanning axis time values;
    determining a compensated time value $\bar{T}$ for each uncompensated time value T; and
    solidifying a solidifiable material by traversing a linear solidification device comprising a a solidification energy source in optical communication with a linear scanning device along a path generation reference frame travel axis while selectively activating and deactivating the solidification energy source at times based on the compensated time values $\bar{\bar{T}}$, wherein the compensated time values $\bar{\bar{T}}$ are determined in accordance with the following equations:

$$\Delta y(T) = \sum_{t=Tc0}^{\bar{T}} f(t)\Delta t,$$

and

$$\bar{T} = \Delta y^{-1}(\bar{T})$$

wherein, f(t) is a step function relating scanning axis scanning length per unit time to scanning axis time, $T_{c0}$ is a reference scanning time that defines the beginning time of the step function f(t) and which corresponds to a virtual build platform scanning axis border within the path generation reference frame;
$\Delta y(T)$ is the distance from the scanning axis border to the scanning axis location corresponding to the uncompensated time value T, and
$\Delta t$ is the time interval defining the step function f(t); and
determining offset values corresponding to each compensated time value $\bar{T}$ from a database relating offset values $\varepsilon$ to compensated time values $\bar{T}$;
determining whether each compensated time value $\bar{T}$ corresponds to a solidification energy source activation event or a solidification energy source deactivation event;
determining a compensated and offset time value $\bar{\bar{T}}$ corresponding to each uncompensated time value in accordance with the following equations:

$$G(Txdu) = \Delta y^{-1}(T)$$

$\bar{\bar{T}}$ = G(Txd$_u$ + $\varepsilon$) if T corresponds to a solidification energy source activation event, and
$\bar{\bar{T}}$ = G(Txd$_u$ - $\varepsilon$) if T corresponds to a solidification energy source deactivation event,

wherein d$_u$ is an average scanning speed along the scanning axis, and the step of selectively activating and deactivating a solidification energy source in optical communication with a linear scanning device at times based on the compensated time values $\bar{T}$ comprises selectively activating the solidification energy source at compensated and offset time values $\bar{\bar{T}}$ that correspond to solidification energy source activation events and selectively deactivating the solidification energy source at compensated and offset time values $\bar{\bar{T}}$ that correspond to solidification energy source deactivation events.

2. A method according to claim 1, wherein the scanning axis border is a virtual build platform border, and the virtual build platform is defined within the path generation reference frame.

3. A method according to claim 1 or claim 2, further comprising the step of determining the value of the reference scanning time $T_{c0}$ in accordance with the following equation:

$$T_{c0} = 0.5T_{LMAX} - \frac{1}{d_u}\left[(0.5)SL_{LMAX} + SHIFT\right]$$

wherein, SLLMAX is a maximum scan length along the scanning axis of a path generation reference frame;

d$_u$ is an average scanning speed along the scanning axis;
$T_{LMAX}$ is a scanning time required to scan a line of solidification energy along the entirety of the maximum scan length SL$_{LMAX}$;
and
SHIFT is an observed shift in a path generation reference frame scanning axis location at which solidification energy strikes the solidifiable material when the solidification energy source is selectively activated at an uncompensated time value corresponding to a desired path generation reference frame scanning axis location of the virtual build platform scanning axis border relative to the desired scanning axis location of the virtual build platform scanning axis border.

**4.** The method of claim 3, wherein when the virtual build platform scanning axis border is at the desired path generation reference frame scanning axis location, the virtual build platform is centered along the path generation reference frame scanning axis.

**Patentansprüche**

**1.** Verfahren zum Herstellen eines dreidimensionalen Objekts, Folgendes umfassend:

Bereitstellen von Objektdaten, die ein dreidimensionales Objekt darstellen, wobei die Objektdaten Positionen in einem Referenzkoordinatensystem definieren, in dem sich das Objekt befindet, wobei das Referenzkoordinatensystem eine Bewegungsachse, eine Abtastachse und eine Bauachse umfasst;
Umwandeln der Objektdaten in Sätze von nicht kompensierten Zeitwerten T, wobei jeder Satz von nicht kompensierten Zeitwerten einer Position entlang der Bauachse entspricht und jeder nicht kompensierte Zeitwert einer Position entspricht, an der eine Verfestigung entlang der Abtastachse anfängt oder endet;
Bereitstellen einer Schrittfunktion f(t), die die Abtastlänge pro Zeiteinheit einer linearen Verfestigungsvorrichtung auf Zeitwerte der Abtastachse bezieht;
Bestimmen eines kompensierten Zeitwerts $\overline{T}$ für jeden unkompensierten Zeitwert T; und
Verfestigen eines verfestigbaren Materials durch Durchlaufen einer linearen Verfestigungsvorrichtung, die eine Verfestigungsenergiequelle in optischer Kommunikation mit einer linearen Abtastvorrichtung umfasst, entlang einer Bewegungsachse des Wegerzeugungsreferenzrahmens, während die Verfestigungsenergiequelle zeitweise basierend auf den kompensierten Zeitwerten $\overline{T}$ wahlweise aktiviert und deaktiviert wird, wobei die kompensierten Zeitwerte $\overline{T}$ gemäß den folgenden Gleichungen bestimmt werden:

$$\Delta y(T) = \sum_{t=Tc0}^{\overline{T}} f(t)\Delta t,$$

und

$$\overline{T} = \Delta y^{-1}(T)$$

wobei, f(t) eine Schrittfunktion ist, die eine Abtastlänge der Abtastachse pro Zeiteinheit auf die Abtastachsenzeit bezieht,
$T_{c0}$ eine Referenzabtastzeit ist, die die Anfangszeit der Schrittfunktion f(t) definiert und die einer Abtastachsengrenze einer virtuellen Bauplattform innerhalb des Wegerzeugungsreferenzrahmens entspricht;
$\Delta y(T)$ der Abstand von der Abtastachsengrenze zu der Abtastachsenposition ist, der dem unkompensierten Zeitwert T entspricht, und
$\Delta t$ das Zeitintervall ist, das die Schrittfunktion f(t) definiert;
und
Bestimmen von Versatzwerten, die jedem kompensierten Zeitwert $\overline{T}$ entsprechen, aus einer Datenbank, die Versatzwerte $\varepsilon$ auf kompensierte Zeitwerte $\overline{T}$ bezieht;
Bestimmen, ob jeder kompensierte Zeitwert $\overline{T}$ einem Aktivierungsereignis der Verfestigungsenergiequelle oder einem Deaktivierungsereignis der Verfestigungsenergiequelle entspricht;
Bestimmen eines kompensierten und versetzten Zeitwerts, $\overline{\overline{T}}$ der jedem unkompensierten Zeitwert entspricht, gemäß den folgenden Gleichungen:

$$G(Txd4 = \Delta y^{-1}\ (T)$$

$\overline{\overline{T}} = G(Txd_u + \varepsilon)$, falls T einem Aktivierungsereignis der Verfestigungsenergiequelle entspricht, und
$\overline{\overline{T}} = G(Txd_u - \varepsilon)$, falls T einem Deaktivierungsereignis der Verfestigungsenergiequelle entspricht,

**EP 3 285 992 B1**

wobei $d_u$ eine durchschnittliche Abtastgeschwindigkeit entlang der Abtastachse ist, und der Schritt des wahlweisen Aktivierens und Deaktivierens einer Verfestigungsenergiequelle in optischer Kommunikation mit einer linearen Abtastvorrichtung zeitweise basierend auf den kompensierten Zeitwerten $\ddot{T}$ das wahlweise Aktivieren der Verfestigungsenergiequelle zu kompensierten und versetzten Zeitwerten $\ddot{T}$, die Aktivierungsereignissen der Verfestigungsenergiequelle entsprechen, und das wahlweise Deaktivieren der Verfestigungsenergiequelle zu kompensierten und versetzten Zeitwerten $\ddot{T}$ umfasst, die Deaktivierungsereignissen der Verfestigungsenergiequelle entsprechen.

2. Verfahren nach Anspruch 1, wobei die Abtastachsengrenze eine Grenze der virtuellen Bauplattform ist und die virtuelle Bauplattform innerhalb des Wegerzeugungsreferenzrahmens definiert ist.

3. Verfahren nach Anspruch 1 oder 2, ferner umfassend den Schritt des Bestimmens des Werts der Referenzabtastzeit $T_{c0}$ gemäß der folgenden Gleichung:

$$T_{C0} = 0{,}5T_{LMAX} - \frac{1}{d_u}[(0{,}5)SL_{LMAX} + VERSCHIEBUNG]$$

wobei, $SL_{LMAX}$ eine maximale Abtastlänge entlang der Abtastachse eines Wegerzeugungsreferenzrahmens ist;
$d_u$ eine durchschnittliche Abtastgeschwindigkeit entlang der Abtastachse ist;
$T_{LMAX}$ eine Abtastzeit ist, die erforderlich ist, um eine Verfestigungsenergielinie entlang der gesamten maximalen Abtastlänge $SL_{LMAX}$ abzutasten;
und
VERSCHIEBUNG eine beobachtete Verschiebung einer Abtastachsenposition des Wegerzeugungsreferenzrahmens ist, an der Verfestigungsenergie auf das verfestigbare Material trifft, wenn die Verfestigungsenergiequelle zu einem unkompensierten Zeitwert wahlweise aktiviert wird, der einer gewünschten Abtastachsenposition des Wegerzeugungsreferenzrahmens der Abtastachsengrenze der virtuellen Bauplattform relativ zu der gewünschten Abtastachsenposition der Abtastachsengrenze der virtuellen Bauplattform entspricht.

4. Verfahren nach Anspruch 3, wobei, wenn sich die Abtastachsengrenze der virtuellen Bauplattform an der gewünschten Abtastachsenposition des Wegerzeugungsreferenzrahmens befindet, die virtuelle Bauplattform entlang der Abtastachse des Wegerzeugungsreferenzrahmens zentriert ist.

**Revendications**

1. Procédé de fabrication d'un objet tridimensionnel, comprenant :

la fourniture des données d'objet représentant un objet tridimensionnel, les données d'objet définissant des emplacements dans un système de coordonnées de référence où se situe l'objet, le système de coordonnées de référence comprenant un axe de déplacement, un axe de balayage et un axe de construction ;
la conversion des données d'objet en ensembles de valeurs de temps non compensées T, chaque ensemble de valeurs de temps non compensées correspondant à un emplacement le long de l'axe de construction, et chaque valeur de temps non compensée correspondant à un emplacement au niveau duquel la solidification commence ou se termine le long de l'axe de balayage ;
la fourniture d'une fonction échelon f(t) qui relie la longueur de balayage par unité de temps d'un dispositif de solidification linéaire aux valeurs de temps de l'axe de balayage ;
la détermination d'une valeur de temps compensée $\ddot{T}$ pour chaque valeur de temps non compensée T ; et
la solidification d'un matériau solidifiable en traversant un dispositif de solidification linéaire comprenant une source d'énergie de solidification en communication optique avec un dispositif de balayage linéaire le long d'un axe de déplacement de trame de référence de génération de voie tout en activant et désactivant sélectivement la source d'énergie de solidification à des moments basés sur les valeurs de temps compensées $\ddot{T}$, les valeurs de temps compensées $\ddot{T}$ étant déterminées selon les équations suivantes :

$$\Delta y(T) = \sum_{t=Tc0}^{\ddot{T}} f(t)\Delta t,$$

et

$$\overline{T} = \Delta y^{-1}(T)$$

f(t) étant une fonction échelon reliant la longueur de balayage de l'axe de balayage par unité de temps au temps de l'axe de balayage,

$T_{c0}$ étant un temps de balayage de référence qui définit le temps de début de la fonction échelon f(t) et qui correspond à un bord d'axe de balayage de plate-forme de construction virtuelle dans la trame de référence de génération de voie ;

$\Delta y(T)$ étant la distance entre le bord de l'axe de balayage et l'emplacement de l'axe de balayage correspondant à la valeur de temps non compensée T, et

$\Delta t$ étant l'intervalle de temps définissant la fonction échelon f(t) ;

et

la détermination des valeurs de décalage correspondant à chaque valeur de temps compensée $\overline{T}$ à partir d'une base de données reliant des valeurs de décalage $\varepsilon$ à des valeurs de temps compensées $\overline{T}$ ;

la détermination du fait de savoir si chaque valeur de temps compensée $\overline{T}$ correspond à un événement d'activation de source d'énergie de solidification ou à un événement de désactivation de source d'énergie de solidification ;

la détermination d'une valeur de temps compensée et décalée $\ddot{T}$ correspondant à chaque valeur de temps non compensée selon les équations suivantes :

$$G(Txdu = \Delta y^{-1}(T)$$

$\ddot{T} = G(Txd_u + \varepsilon)$ si T correspond à un événement d'activation de source d'énergie de solidification, et

$\ddot{T} = G(Txd_u - \varepsilon)$ si T correspond à un événement de désactivation de la source d'énergie de solidification,

$d_u$ étant une vitesse de balayage moyenne le long de l'axe de balayage, et l'étape d'activation et de désactivation sélective d'une source d'énergie de solidification en communication optique avec un dispositif de balayage linéaire à des moments basés sur les valeurs de temps compensées $\overline{T}$ comprenant l'activation sélective de la source d'énergie de solidification au niveau des valeurs de temps compensées et décalées $\ddot{T}$ qui correspondent aux événements d'activation de la source d'énergie de solidification et de désactivation sélective de la source d'énergie de solidification au niveau des valeurs de temps compensées et décalées $\ddot{T}$ qui correspondent aux événements de désactivation de la source d'énergie de solidification.

2. Procédé selon la revendication 1, le bord d'axe de balayage étant un bord de plate-forme de construction virtuelle, et la plate-forme de construction virtuelle étant définie dans la trame de référence de génération de voie.

3. Procédé selon la revendication 1 ou la revendication 2, comprenant en outre l'étape de détermination de la valeur du temps de balayage de référence $T_{c0}$ selon l'équation suivante :

$$T_{c0} = 0{,}5T_{LMAX} - \frac{1}{d_u}[(0{,}5)SL_{LMAX} + SHIFT]$$

$SL_{LMAX}$ étant une longueur de balayage maximale le long de l'axe de balayage d'une trame de référence de génération de voie ;

$d_u$ étant une vitesse de balayage moyenne le long de l'axe de balayage ;

$T_{LMAX}$ étant un temps de balayage nécessaire pour balayer une ligne d'énergie de solidification sur toute la longueur de balayage maximale $SL_{LMAX}$ ;

et

SHIFT étant un décalage observé dans un emplacement d'axe de balayage de trame de référence de génération de voie au niveau duquel l'énergie de solidification frappe le matériau solidifiable lorsque la source d'énergie de solidification est activée de manière sélective au niveau d'une valeur de temps non compensée correspondant à un emplacement d'axe de balayage de trame de référence de génération de voie souhaité du bord d'axe de balayage de plate-forme de construction virtuelle par rapport à l'emplacement d'axe de balayage souhaité de la bordure d'axe de balayage de plate-forme de construction virtuelle.

4. Procédé selon la revendication 3, lorsque la bordure de l'axe de balayage de la plate-forme de construction virtuelle se trouve au niveau de l'emplacement de l'axe de balayage de trame de référence de génération de voie souhaité, la plate-forme de construction virtuelle étant centrée le long de l'axe de balayage de trame de référence de génération de voie.

FIG. 1A

FIG. 1B

FIG. 2A

FIG. 2B

FIG. 2C

FIG. 2D

EP 3 285 992 B1

FIG. 3A

FIG. 3B

$i = 1,$
$j = j_{max},$
$k = k_{max}$

78

$j = j_{max},$
$i = i_{max},$
$k = k_{max}$

$k_{max}$

87

90

Z

y

X

$i = 1,$
$j = 1,$
$k = 1$

FIG. 4A

$i = i_{max},$
$j = 1,$
$k = 1$

$j = j_{max},$
$i = i_{max},$
$k = 1$

dz

90

dx

dy

FIG. 4B

FIG. 4C

FIG. 4D

FIG. 5A

| m (computer memory index) | n ( string index) | Data string |
|:---:|:---:|:---:|
| 0 | 20 | FFFFFFF, 20, 31000, 33000 |
| 1 | 21 | FFFFFFF, 21, 30000, 34000 |
| 2 | 22 | FFFFFFF, 22, 30000, 34000 |
| 3 | 23 | FFFFFFF, 23, 29000, 35000 |
| 4 | 24 | FFFFFFF, 24, 29000, 35000 |
| 5 | 25 | FFFFFFF, 25, 30000, 34000 |
| 6 | 26 | FFFFFFF, 26, 30000, 34000 |
| 7 | 27 | FFFFFFF, 27, 31000, 33000 |

FIG. 5C

FIG. 5B

EP 3 285 992 B1

**FIG. 6**

$T_0$   $T_i$   $T_{i+1}$   $T_E$

122   124

$\varepsilon_0$   $\varepsilon_{i+1}$   $\varepsilon_{i+1}$

$P_E$

120   50   126

$d_{i+1}$

$D_i$

$D_{i+1}$   $\varepsilon_{i+1}$

**FIG. 7**

$T_A$   144   $T_B$

138

136   $T_0$   140

$\varepsilon A$   $\varepsilon B$   50

$D_A$

$D_B$

O   A   128   B   134

130   50

132

$\overline{OA}$

$\overline{OB}$

FIG. 8

FIG. 9

| Scanning (y) Axis Range (j) | TRAVEL (X) AXIS POSITION | | | | | | | |
|---|---|---|---|---|---|---|---|---|
| | X1 | X2 | X3 | X4 | X5 | X6 | X7 | X8 |
| 1 | (T1, T2) | | | (T1, T4) | | | | |
| | | (T2, T3) | | | | | | |
| | | | (T3, T4) | | | | | |
| 2 | | | | | (T4, T5) | | | (T4, T6) |
| | | | | | | (T5, T6) | | |
| | | | | | | | (T6, T7) | |
| 3 | (T6, T7) | | | (T6, T9) | | | | |
| | | (T7, T8) | | | | | | |
| | | | (T8, T9) | | | | | |
| 4 | | | | | (T9, T10) | | | (T9, T12) |
| | | | | | | (T10, T11) | | |
| | | | | | | | (T11, T12) | |
| 5 | (T12, T13) | | | (T12, T15) | | | | |
| | | (T13, T14) | | | | | | |
| | | | (T14, T15) | | | | | |
| 6 | | | | | (T15, T16) | | | (T15, T18) |
| | | | | | | (T16, T17) | | |
| | | | | | | | (T17, T18) | |
| 7 | (T18, T19) | | | (T18, T21) | | | | |
| | | (T19, T20) | | | | | | |
| | | | (T20, T21) | | | | | |

FIG. 10A

EP 3 285 992 B1

EP 3 285 992 B1

| m (computer memory index) | n (string index) | Travel (X) Axis Position | Data string |
|---|---|---|---|
| 0 | 20 | X1 | FFFFFF, 20, T1, T2, T6, T7, T12, T13, T18, T19 . . . |
| 1 | 30 | X2 | FFFFFF, 30, T2, T3, T7, T8, T13, T14, T19, T20 . . . |
| 2 | 40 | X3 | FFFFFF, 40, T3, T4, T8, T9, T14, T15, T20, T21 . . . |
| 3 | 50 | X4 | FFFFFF, 50, T1, T4, T6, T9, T12, T15, T18, T21 . . . |
| 4 | 60 | X5 | FFFFFF, 60, T4, T5, T9, T10, T15, T16 . . . |
| 5 | 70 | X6 | FFFFFF, 70, T5, T6, T10, T11, T16, T17 . . . |
| 6 | 80 | X7 | FFFFFF, 80, T6, T7, T11, T12, T17, T18 . . . |
| 7 | 90 | X8 | FFFFFF, 90, T4, T6, T9, T12, T15, T18 . . . |

FIG. 10B

**FIG. 11A**

START

1020
Read uncompensated time
values T for activating ($T_1$) and
deactivating ($T_2$) solidification
energy source

1022
Calculate compensated time
values $\bar{T}$ for activating ($\bar{T}_1$) and
deactivating ($\bar{T}_2$) solidification
energy source
$\bar{T}_1 = G(T_1 x d_u)$
$\bar{T}_2 = G(T_2 x d_u)$

1024
Determine offset values $\varepsilon_1$, $\varepsilon_2$
based on compensated time
values $\bar{T}$, where $\varepsilon_1 = \varepsilon(\bar{T}_1)$ and
$\varepsilon_2 = \varepsilon(\bar{T}_2)$

1026
Calculate compensated and
offset time values $\bar{\bar{T}}$ for
activating $\bar{\bar{T}}_1$ and deactivating
$\bar{\bar{T}}_2$ solidification energy source
$\bar{\bar{T}}_1 = G(T x d_u - \varepsilon_1)$
$\bar{\bar{T}}_2 = G(T x d_u + \varepsilon_2)$

1028
Activate and deactivate
solidification energy source at
times defined by compensated
and offset time values $\bar{\bar{T}}$

END

EP 3 285 992 B1

**FIG. 11B**

START

1030 — Divide scanning axis into a plurality of ranges, each comprising a plurality of sub-ranges

1032 — Solidify a large calibration object in each range $j \in \{1, \ldots, k\}$

1034 — Solidify a small calibration object in each sub-range $i \in \{1, \ldots, n\}$

1036 — Measure large calibration object lengths $L'(j)$ in each $j$ range

1038 — Measure small calibration object lengths $\ell'(j,i)$ in each $i$ subrange of each $j$ range

1040 — Calculate error (offset) values $\epsilon(j)$ for each range $j$

1042 — Calculate adjusted lengths $\ell_a(j,i)$ for each small calibration object in each $i$ subrange of each $j$ range

1044 — Select a continuous set of ranges $j_b$ to $j_e$ within the set of $j$ ranges to calculate proportionate error

1046 — Calculate expected length $L_{expected}$ of solidification throughout continuous set of ranges based on sum of adjusted lengths of small calibration objects $\ell_a(j,i)$ throughout the continuous set of ranges $j_b$ to $j_e$ and error values $\epsilon(j_b)$ and $\epsilon(j_e)$ for first and last ranges in continuous set

1048 — Calculate proportionate error $\bar{\epsilon}$ for continuous set of ranges from $j_b$ to $j_e$ based on sum of measured lengths $L'(j)$ of large calibration objects, adjusted lengths $\ell_a(j,i)$ of each small calibration objects in continuous set of ranges $j_b$ to $j_e$, and ideal solidification time $N_{small}$ for small calibration objects

1050 — Calculate refined adjusted lengths $\ell_{ra}(j,i)$ of small calibration objects based on adjusted lengths $\ell_a(j,i)$ of small calibration objects in continuous set of ranges, proportionate error $\bar{\epsilon}$ for continuous set of ranges and ideal solidification time $N_{small}$ for small calibration objects in continuous set of ranges

1052 — Calculate initial time value $Tc_0$ for shifted and centered virtual build platform

1054 — Calculate time values ($Tc_0$, $Tc_0 + N_{small}$, $Tc_0 + 2N_{small} \ldots$) and correlate refined adjusted lengths $\ell_{ra}(j,i)$ to create step function $f(t)$

END

39

302     304     306     310     312

| Scanning Axis Range Index (j) from test part generation | Scanning Axis Range Sub-index (i) | Time Value Pair After Shifting and Centering | | $f(t) = $ $\ell_{ra}(j,i)/N_{small}$ | Error (offset) $\varepsilon(j)$ |
| | | $T_{begin}$ **306a** | $T_{end}$ **306b** | | |
| 1 | 1 | | | | |
| | 2 | | | | |
| | 3 | | | | |
| 2 | 1 | | | | |
| | 2 | | | | |
| | 3 | | | | |
| 3 | 1 | $T_{c0}$ | $T_{c0} + N_{small}$ | $\ell_{ra}(3,1)/ N_{small}$ | $\varepsilon(3)$ |
| | 2 | $T_{c0} + N_{small}$ | $T_{c0} + 2N_{small}$ | $\ell_{ra}(3,2) / N_{small}$ | $\varepsilon(3)$ |
| | 3 | $T_{c0} + 2N_{small}$ | $T_{c0} + 3N_{small}$ | $\ell_{ra}(3,3) / N_{small}$ | $\varepsilon(3)$ |
| 4 | 1 | $T_{c0} + 3N_{small}$ | $T_{c0} + 4N_{small}$ | $\ell_{ra}(4,1) / N_{small}$ | $\varepsilon(4)$ |
| | 2 | $T_{c0} + 4N_{small}$ | $T_{c0} + 5N_{small}$ | $\ell_{ra}(4,2) / N_{small}$ | $\varepsilon(4)$ |
| | 3 | $T_{c0} + 5N_{small}$ | $T_{c0} + 6N_{small}$ | $\ell_{ra}(4,3) / N_{small}$ | $\varepsilon(4)$ |
| 5 | 1 | $T_{c0} + 6N_{small}$ | $T_{c0} + 7N_{small}$ | $\ell_{ra}(5,1) / N_{small}$ | $\varepsilon(5)$ |
| | 2 | $T_{c0} + 7N_{small}$ | $T_{c0} + 8N_{small}$ | $\ell_{ra}(5,2) / N_{small}$ | $\varepsilon(5)$ |
| | 3 | $T_{c0} + 8N_{small}$ | $T_{c0} + 9N_{small}$ | $\ell_{ra}(5,3) / N_{small}$ | $\varepsilon(5)$ |
| 6 | 1 | $T_{c0} + 9N_{small}$ | $T_{c0} + 10N_{small}$ | $\ell_{ra}(6,1) / N_{small}$ | $\varepsilon(6)$ |
| | 2 | $T_{c0} + 10N_{small}$ | $T_{c0} + 11N_{small}$ | $\ell_{ra}(6,2) / N_{small}$ | $\varepsilon(6)$ |
| | 3 | $T_{c0} + 11N_{small}$ | $T_{c0} + 12N_{small}$ | $\ell_{ra}(6,3) / N_{small}$ | $\varepsilon(6)$ |
| 7 | 1 | $T_{c0} + 12N_{small}$ | $T_{c0} + 13N_{small}$ | $\ell_{ra}(7,1) / N_{small}$ | $\varepsilon(7)$ |
| | 2 | $T_{c0} + 13N_{small}$ | $T_{c0} + 14N_{small}$ | $\ell_{ra}(7,2) / N_{small}$ | $\varepsilon(7)$ |
| | 3 | $T_{c0} + 14N_{small}$ | $T_{c0} + 15N_{small}$ | $\ell_{ra}(7,3) / N_{small}$ | $\varepsilon(7)$ |
| 8 | 1 | $T_{c0} + 15N_{small}$ | $T_{c0} + 16N_{small}$ | $\ell_{ra}(8,1) / N_{small}$ | $\varepsilon(8)$ |
| | 2 | $T_{c0} + 16N_{small}$ | $T_{c0} + 17N_{small}$ | $\ell_{ra}(8,2) / N_{small}$ | $\varepsilon(8)$ |
| | 3 | $T_{c0} + 17N_{small}$ | $T_{c0} + 18N_{small}$ | $\ell_{ra}(8,3) / N_{small}$ | $\varepsilon(8)$ |
| ........ | ........ | ......... | | ..... | ........ |
| k | 1 | $T_{c0} + (3k-9)N_{small}$ | $T_{c0} + (3k-8)N_{small}$ | $\ell_{ra}(k,1) / N_{small}$ | $\varepsilon(k)$ |
| | 2 | $T_{c0} + (3k-8)N_{small}$ | $T_{c0} + (3k-7)N_{small}$ | $\ell_{ra}(k,1) / N_{small}$ | $\varepsilon(k)$ |
| | 3 | $T_{c0} + (3k-7)N_{small}$ | $T_{c0} + (3k-6)N_{small}$ | $\ell_{ra}(k,1) / N_{small}$ | $\varepsilon(k)$ |
| | | | | | |

FIG. 12

300

FIG. 13

FIG. 14

FIG. 15

42

$$L_{Expected} = \sum_{j=j_b}^{j_e} L'(j)$$

Range $j_e$

Range $j_b$

$T(j_e)$

$T(j_b)$

Travel (x) Axis

Scanning (y) Axis

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014165643 A2
- US 53463812
- US 13774355 B
- US 534638
- US 09168313
- US 05180113
- US 051801
- US 091683